# EUROPÄISCHE PATENTSCHRIFT

(11) **EP 2 185 620 B1**
(45) Veröffentlichungstag und Bekanntmachung des Hinweises auf die Patenterteilung: **13.04.2011**
(21) Anmeldenummer: 08787385.7
(22) Anmeldetag: 21.08.2008
(51) Int. Cl.: C08G 18/64, C08G 18/75

(54) **XEROGELE AUF BASIS VON POLYHARNSTOFF**
XEROGELS BASED ON POLYUREA
XÉROGELS À BASE DE POLYURÉE

(30) Priorität: 28.08.2007 EP 07016818
(43) Veröffentlichungstag der Anmeldung: 19.05.2010
(60) Teilanmeldung: 10174889.5
(73) Patentinhaber: BASF SE, 67056 Ludwigshafen (DE)
(72) Erfinder: SCHÄDLER, Volker, Ann Arbor, MI 48104 (US); SANCHEZ-FERRER, Antonio, E-08015 Barcelona (ES); RAMAN, Vijay Immanuel, 68163 Mannheim (DE); FRICKE, Marc, 49080 Osnabrück (DE); BRUCHMANN, Bernd, 67251 Freinsheim (DE)
(86) Internationale Anmeldenummer: PCT/EP2008/060941
(87) Internationale Veröffentlichungsnummer: WO 2009/027310

(56) Entgegenhaltungen:
- WO-A-95/02009
- US-A- 6 063 826
- US-A1- 2006 211 840

## Beschreibung

Die Erfindung betrifft ein Xerogel enthaltend
- von 20 bis 90 Gew.-% einer Monomerkomponente (a1) bestehend aus mindestens einem mehrfunktionellen Isocyanat und
- von 10 bis 80 Gew.-% einer Monomerkomponente (a2) bestehend aus mindestens einem Polyalkylenpolyamin,
wobei die Summe der Gew.-% der Monomerkomponenten (a1) und (a2) 100 Gew.-% ergibt und wobei die Monomerkomponenten im Xerogel in polymerer Form vorliegen und der volumengewichtete mittlere Porendurchmesser des Xerogels höchstens 5 µm beträgt.

Weiterhin betrifft die Erfindung ein Verfahren zur Herstellung von Xerogelen, die so erhältlichen Xerogele sowie die Verwendung der Xerogele als Dämmstoff und in Vakuumisolationspaneelen.

Poröse Materialien, beispielsweise Polymerschäume, mit Poren im Größenbereich von deutlich unter 1 µm und einer hohen Porosität von mindestens 70 % sind aufgrund theoretischer Überlegungen besonders gute Wärmeisolatoren.

Solche porösen Materialien mit kleinem mittleren Porendurchmesser können beispielsweise als organische Xerogele vorliegen. In der Literatur wird der Begriff Xerogel nicht durchweg einheitlich verwendet. Im Allgemeinen wird unter einem Xerogel ein poröses Material verstanden, welches durch ein Sol-Gel-Verfahren hergestellt wurde, wobei die flüssige Phase durch Trocknung unterhalb der kritischen Temperatur und unterhalb des kritischen Drucks der flüssigen Phase ("subkritische Bedingungen") aus dem Gel entfernt wurde. Im Gegensatz hierzu spricht man im Allgemeinen von Aerogelen, wenn die Entfernung der flüssigen Phase aus dem Gel unter überkritischen Bedingungen durchgeführt wurde.

Beim Sol-Gel-Verfahren wird zunächst ein Sol auf Basis einer reaktiven organischen Gelvorstufe hergestellt und danach das Sol durch eine vernetzende Reaktion zu einem Gel umgesetzt. Um aus dem Gel ein poröses Material, beispielsweise ein Xerogel, zu erhalten, muss die Flüssigkeit entfernt werden. Dieser Schritt wird nachfolgend vereinfachend als Trocknung bezeichnet.

Xerogele auf Basis von Polyisocyanaten wie zum Beispiel solche auf Basis von Polyharnstoff sind dem Fachmann im Prinzip bekannt. Allerdings bilden Isocyanate mit aliphatischen Aminen mit primären Aminogruppen im Allgemeinen keine Gele mit für die Anwendung als Dämmstoff geeigneter Porenstruktur, da die Reaktionsgeschwindigkeit so schnell ist, dass eine homogene Durchmischung und Gelierung der Reaktionskomponenten nicht möglich ist.

Die US-2006/0211840 A1 offenbart Aerogele, d.h. unter überkritischen Bedingungen aus Gelen hergestellte Materialien, auf Basis von Polyharnstoff. Dabei werden Polyisocyanate mit einem Polyoxyalkylenamin in einem Lösungsmittel zur Umsetzung gebracht und das erhaltene Gel superkritisch getrocknet.

Die WO-95/02009 offenbart Isocyanat-basierte Xerogele, die insbesondere für Anwendungen im Bereich der Vakuumisolation geeignet sind. Die Publikationsschrift offenbart zudem ein Sol-Gel-basiertes Verfahren zur Herstellung der Xerogele, wobei bekannte, insbesondere aromatische Polyisocyanate sowie ein unreaktives Lösungsmittel zum Einsatz kommen. Als gegenüber Isocyanaten reaktive Verbindungen werden unter anderem aliphatische und aromatische Polyamine genannt. Ethylendiamin und Hexamethylendiamin sowie aminierte Polyoxyalkylenpolyole werden als Beispiele für Verbindungen mit reaktiven Wasserstoffatomen erwähnt. Konkret offenbarte, reine Polyharnstoff-Xerogele sind jedoch auf die im Vergleich zu aliphatischen Aminen gegenüber Isocyanaten weniger reaktiven aromatischen Amine, insbesondere Diethyltoluylendiamin, beschränkt. Gemäß der Publikationsschrift weisen die offenbarten Xerogele zudem generell mittlere Porengrößen im Bereich von 50 µm auf.

Die thermische Leitfähigkeit der in der WO-95/02009 offenbarten Xerogele ist jedoch nicht für alle Anwendungen ausreichend. Für Anwendungen im Bereich von Drücken oberhalb des Vakuumbereiches, insbesondere im Druckbereich von ungefähr 10 bis ungefähr 100 mbar, ist die thermische Leitfähigkeit im Allgemeinen unbefriedigend hoch. Zudem sind die Materialeigenschaften, insbesondere die mechanische Stabilität des Xerogels und die Porosität, nicht für alle Anwendungen ausreichend.

Es bestand daher die Aufgabe, ein poröses Material zur Verfügung zu stellen, das eine geringe thermische Leitfähigkeit aufweist. Darüber hinaus sollten die Xerogele auch bei Drücken oberhalb des Vakuumbereiches, insbesondere in einem Druckbereich von ungefähr 1 mbar bis ungefähr 100 mbar eine geringe thermische Leitfähigkeit aufweisen. Dies ist wünschenswert, da in Vakuumpanelen im Laufe der Zeit eine Druckzunahme erfolgt. Zudem sollte das poröse Material eine hohe Porosität und eine ausreichend hohe mechanische Stabilität aufweisen.

Eine weitere Aufgabe bestand darin, ein Verfahren zur Verfügung zu stellen, das ein Xerogel mit geringer Porengröße, hoher Porosität und hoher mechanischer Stabilität auf Basis aliphatischer Amine zugänglich macht. Zudem sollte das Verfahren zur Herstellung der Xerogele poröse Materialien mit einer geringen thermischen Leitfähigkeit insbesondere im Druckbereich von 1 bis 100 mbar zur Verfügung stellen. Das Verfahren sollte Polyharnstoff-Xerogele zugänglich machen und gleichzeitig für eine breite Basis von Aminen, insbesondere für aliphatische Amine, anwendbar sein. Demgemäß wurden die erfindungsgemäßen Xerogele und ein Verfahren zur Herstellung von Xerogelen gefunden.

Bevorzugte Ausführungsformen sind den Ansprüchen und der Beschreibung zu entnehmen. Kombinationen bevorzugter Ausführungsformen verlassen nicht den Rahmen dieser Erfindung.

### Xerogel

Erfindungsgemäß enthält das Xerogel von 20 bis 90 Gew.-% einer Monomerkomponente (a1) bestehend aus mindestens einem mehrfunktionellen Isocyanat und von 10 bis 80 Gew.-% einer Monomerkomponente (a2) bestehend aus mindestens einem Polyalkylenpolyamin. Die Monomerkomponenten (a1) und (a2) liegen im Xerogel in polymerer Form vor. Erfindungsgemäß beträgt der volumengewichtete mittlere Porendurchmesser des Xerogels höchstens 5 µm. Bevorzugt enthält das Xerogel von 30 bis 85 Gew.-%, insbesondere von 50 bis 80 Gew.-% der Monomerkomponente (a1) und von 15 bis 70 Gew.-%, insbesondere von 20 bis 50 Gew.-% der Monomerkomponente (a2).

Unter einem Xerogel wird im Rahmen der vorliegenden Erfindung ein poröses Material mit einer Porosität von mindestens 70 Vol.-% und einer volumengemittelten mittleren Porengröße von höchstens 50 Mikrometer verstanden, welches durch ein Sol-Gel-Verfahren hergestellt wurde, wobei die flüssige Phase durch Trocknen unterhalb der kritischen Temperatur und unterhalb des kritischen Drucks der flüssigen Phase ("subkritische Bedingungen") aus dem Gel entfernt wurde.

Unter Funktionalität einer Verbindung soll im Rahmen der vorliegenden Erfindung die Zahl der reaktiven Gruppen pro Molekül verstanden werden. Im Fall der Monomerkomponente (a1) ist die Funktionalität die Anzahl der Isocyanatgruppen pro Molekül. Im Falle der Aminogruppen der Monomerkomponente (a2) bezeichnet die Funktionalität die Zahl der reaktiven Aminogruppen pro Molekül. Eine mehrfunktionelle Verbindung weist dabei eine Funktionalität von mindestens 2 auf.

Unter Monomerkomponente sind sowohl Isocyanate beziehungsweise Amine in monomerer Form als auch noch reaktive, d.h. mit der jeweils anderen Komponente reagierbare Isocyanate beziehungsweise Amine in oligomerer oder polymerer Form zu verstehen.

Falls als Monomerkomponente (a1) oder (a2) Mischungen aus Verbindungen mit unterschiedlicher Funktionalität zum Einsatz kommen, ergibt sich die Funktionalität der Komponenten aus dem zahlengewichteten Mittel der Funktionalität der einzelnen Verbindungen. Eine mehrfunktionelle Verbindung enthält mindestens zwei der oben genannten funktionellen Gruppen pro Molekül.

Der mittlere Porendurchmesser wird mittels Quecksilber-Intrusionsmessung nach DIN 66133 bestimmt und ist im Rahmen der vorliegenden Erfindung grundsätzlich ein volumengewichteter Mittelwert. Die Quecksilber-Intrusionsmessung nach DIN 66133 ist eine porosimetrische Methode und wird in einem Porosimeter durchgeführt. Dabei wird Quecksilber in eine Probe des porösen Materials gepresst. Kleine Poren erfordern einen höheren Druck, um mit dem Quecksilber gefüllt zu werden als große Poren, und aus dem entsprechenden Druck/Volumen-Diagramm kann man eine Porengrößenverteilung und den volumengewichteten mittleren Porendurchmesser bestimmen.

Erfindungsgemäß beträgt der volumengewichtete mittlere Porendurchmesser des Xerogels höchstens 5 µm. Bevorzugt beträgt der volumengewichtete mittlere Porendurchmesser des Xerogels höchstens 3 µm, besonders bevorzugt höchstens 2 µm und insbesondere höchstens 1,5 µm.

Zwar ist eine möglichst geringe Porengröße bei hoher Porosität aus Sicht einer geringen thermischen Leitfähigkeit wünschenswert. Herstellungsbedingt und um ein mechanisch ausreichend stabiles Xerogel zu erhalten, ergibt sich jedoch eine praktische untere Grenze des volumengewichteten mittleren Porendurchmessers. Im Allgemeinen beträgt der volumengewichtete mittlere Porendurchmesser mindestens 200 nm, vorzugsweise mindestens 300 nm. In vielen Fällen beträgt der volumengewichtete mittlere Porendurchmesser mindestens 400 nm, beispielsweise mindestens 700 nm.

Bevorzugt weist das erfindungsgemäße Xerogel eine Porosität von mindestens 70 Vol.-%, insbesondere von 70 bis 99 Vol.-%, besonders bevorzugt mindestens 80 Vol.-% auf, ganz besonders bevorzugt mindestens 85 Vol.-%, insbesondere von 85 bis 95 Vol.-%. Die Porosität in Vol.-% bedeutet, dass der genannte Anteil des Gesamtvolumens des Xerogels aus Poren besteht. Zwar ist aus Sicht einer minimalen Wärmeleitfähigkeit meist eine möglichst hohe Porosität erwünscht, doch ist die Porosität durch die mechanischen Eigenschaften und die Verarbeitbarkeit des Xerogels nach oben begrenzt.

Erfindungsgemäß liegen die Monomerkomponenten (a1) und (a2), im folgenden Komponenten (a1) und (a2) genannt, im Xerogel in polymerer Form vor. Vorzugsweise liegen die Komponenten (a1) und (a2) im Xerogel überwiegend über Harnstoffverknüpfungen gebunden vor, insbesondere im wesentlichen ausschließlich über Harnstoffverknüpfungen gebunden. Eine weitere mögliche Verknüpfung im Xerogel sind Isocyanurat-Verknüpfungen, die durch Trimerisation von Isocyanatgruppen der Komponente (a1) entstehen. Sofern das Xerogel weitere Monomerkomponenten enthält, sind weitere mögliche Verknüpfungen insbesondere Urethangruppen, welche durch Reaktion von Isocyanatgruppen mit Alkoholen oder Phenolen entstehen.

Bevorzugt liegen die Komponenten (a1) und (a2) im Xerogel zu mindestens 50 mol-% durch Harnstoffgruppen, insbesondere Harnstoffgruppen gemäß der Struktureinheit -NH-CO-NH-, verknüpft vor. Vorzugsweise liegen die Komponenten (a1) und (a2) im Xerogel von 50 bis 100 mol-% durch Harnstoffgruppen verknüpft vor, insbesondere von 60 bis 100 mol-%, ganz besonders bevorzugt von 70 bis 100 mol-%, insbesondere von 80 bis 100 mol-%, beispielsweise von 90 bis 100 mol-%.

Die zu 100 mol-% fehlenden mol-% liegen als weitere Verknüpfungen vor, insbesondere als Isocyanurat-Verknüpfungen. Die weiteren Verknüpfungen können jedoch auch in Form anderer, dem Fachmann bekannter Verknüpfungen von Isocyanat-Polymeren vorliegen. Beispielhaft genannt seien Ester-, Harnstoff-, Biuret-, Allophanat-, Carbodiimid-, Isocyanurat-, Uretdion- und/oder Urethangruppen.

Die Bestimmung der mol-% der Verknüpfungen der Monomerkomponenten im Xerogel erfolgt mittels NMR-Spektroskopie (Kernspinresonanz) im Festkörper oder in gequollenem Zustand. Geeignete Bestimmungsmethoden sind dem Fachmann bekannt.

Erfindungsgemäß enthält das Xerogel von 20 bis 90 Gew.-% mindestens eines mehrfunktionellen Isocyanates, das im Xerogel in polymerer (umgesetzter) Form vorliegt. Als mehrfunktionelle Isocyanate kommen aromatische, aliphatische, cycloaliphatische und/oder araliphatische Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (a1) in diesem Fall verschiedene mehrfunktionelle Isocyanate enthält. Als Bestandteil der Komponente (a1) in Betracht kommende mehrfunktionelle Isocyanate weisen zwei (im folgenden Diisocyanate genannt) oder mehr als zwei Isocyanatgruppen pro Molekül der Monomerkomponente auf.

### Mehrfunktionelle Isocyanate

Geeignete mehrfunktionelle Isocyanate sind insbesondere 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylendiisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-isocyanatomethyl-cyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat und/oder 4,4'-, 2,4'- und 2,2'-Dicyclohexylmethandiisocyanat.

Bevorzugt sind folgende Ausführungsformen der Komponente (a1):
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate,
iii) Isophorondiisocyanat (IPDI), und
iv) Gemische aus zwei oder drei der vorgenannten Ausführungsformen.

Als mehrfunktionelles Isocyanat der Komponente (a1) besonders bevorzugt ist oligomeres Diphenylmethandiisocyanat. Bei oligomerem Diphenylmethandiisocyanat (im folgenden oligomeres MDI genannt) handelt es sich um ein oder ein Gemisch aus mehreren oligomeren Kondensationsprodukten und somit Derivaten von Diphenylmethandiisocyanat (MDI). Die mehrfunktionellen Isocyanate können bevorzugt auch aus Mischungen von monomeren aromatischen Diisocyanaten und oligomerem MDI aufgebaut sein.

Oligomeres MDI enthält ein oder mehrere mehrkernige Kondensationsprodukte des MDI mit einer Funktionalität von mehr als 2, insbesondere 3 oder 4 oder 5. Oligomeres MDI ist bekannt und wird häufig als Polyphenylpolymethylenisocyanat bezeichnet. Oligomeres MDI ist üblicherweise aus einer Mischung aus MDI-basierten Isocyanaten mit unterschiedlicher Funktionalität aufgebaut. Üblicherweise wird oligomeres MDI im Gemisch mit monomerem MDI eingesetzt.

Die (mittlere) Funktionalität eines Isocyanates, welches oligomeres MDI enthält, kann im Bereich von ungefähr 2,3 bis ungefähr 5 variieren, vorzugsweise von 2,5 bis 3,5, insbesondere von 2,5 bis 3. Eine solche Mischung von MDI-basierten mehrfunktionellen Isocyanaten mit unterschiedlichen Funktionalitäten ist insbesondere das Roh-MDI, das bei der Herstellung von MDI anfällt.

Mehrfunktionelle Isocyanate oder Mischungen mehrerer mehrfunktioneller Isocyanate auf Basis von MDI sind bekannt und werden beispielsweise von Elastogran GmbH unter dem Namen Lupranat® vertrieben.

Vorzugsweise beträgt die Funktionalität der Komponente (a1) mindestens zwei, insbesondere mindestens 2,2 und besonders bevorzugt mindestens 2,5. Die Funktionalität der Komponente (a1) beträgt dabei bevorzugt von 2,5 bis 4 und besonders bevorzugt von 2,5 bis 3.

Vorzugsweise beträgt der Gehalt an Isocyanatgruppen der Komponente (a1) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer besonders bevorzugten Ausführungsform besteht die Monomerkomponente (a1) aus mindestens einem mehrfunktionellen Isocyanat ausgewählt aus Diphenylmethan-diisocyanat, Toluylendiisocyanat, oligomerem Diphenylmethandiisocyanat und Isophorondiisocyanat. Unter MDI beziehungsweise TDI sind eines oder Mischungen aus mehreren der oben genannten Isomere des MDI beziehungsweise TDI zu verstehen.

Im Rahmen dieser besonders bevorzugten Ausführungsform enthält die Komponente (a1) ganz besonders bevorzugt oligomeres Diphenylmethandiisocyanat und weist eine Funktionalität von mindestens 2,5 auf.

Ganz besonders bevorzugt besteht die Monomerkomponente (a1) aus mindestens einem mehrfunktionellen Isocyanat ausgewählt aus oligomerem Diphenylmethandiisocyanat mit einer Funktionalität von mindestens 2,5 und Isophorondiisocyanat.

### Mehrfunktionelle aliphatische Amine

Erfindungsgemäß besteht die Monomerkomponente (a2) aus mindestens einem Polyalkylenpolyamin als mehrfunktionelles aliphatisches Amin. Unter mehrfunktionellen Aminen sind dabei solche zu verstehen, welche mindestens zwei gegenüber Isocyanaten reaktive Aminogruppen pro Molekül aufweisen. Gegenüber Isocyanaten reaktiv sind dabei primäre und sekundäre Aminogruppen, wobei die Reaktivität der primären Aminogruppen im allgemeinen deutlich höher ist als die der sekundären.

Vorzugsweise enthalten die mehrfunktionellen aliphatischen Amine mindestens eine primäre Aminogruppe, insbesondere mindestens zwei primäre Aminogruppen.

Die geeigneten mehrfunktionellen aliphatischen Amine können einzeln oder in Mischungen eingesetzt werden.

Erfindungsgemäß besteht die Monomerkomponente (a2) aus mindestens einem Polyalkylenpolyamin. Unter dem Begriff Polyalkylenpolyamin sollen im Rahmen der vorliegenden Erfindung aliphatische Amine verstanden werden, die mindestens 3 Aminogruppen (primär, sekundär oder tertiär) enthalten und die ein gewichtsmittleres Molekulargewicht (Mw) von mindestens 500 g/mol aufweisen.

Das Molekulargewicht der in Betracht kommenden Polyalkylenpolyamine kann in einem weiten Bereich variieren, insbesondere von 500 g/mol bis 3.000.000 g/mol. Vorzugsweise weisen die als Komponente (a2) bevorzugten Polyalkylenpolyamine ein gewichtsmittleres Molekulargewicht (Mw) von 500 g/mol bis 50.000 g/mol, vorzugsweise von 800 g/mol bis 25.000 g/mol, besonders bevorzugt von 1000 g/mol bis 10.000 g/mol, auf.

Als Polyalkylenpolyamine sind insbesondere Polyethylenimine besonders bevorzugt. Unter Polyethyleniminen werden im Rahmen der vorliegenden Erfindung sowohl Oligomere als auch Homo- und Copolymere verstanden, welche die Gruppierung -CH2-CH2-NH- aufweisen sowie mindestens 3 Aminogruppen enthalten und ein gewichtsmittleres Molekulargewicht (Mw) von mindestens 500 g/mol aufweisen.

Vorzugsweise sind die als Monomerkomponente (a2) besonders bevorzugten Polyethylenimine aus Einheiten aufgebaut, die ausgewählt sind aus terminalen Ethylenimineinheiten der Struktur -(CH₂-CH₂-NH₂), linearen Ethylenimineinheiten der Struktur -(CH₂-CH₂-NH)- und verzweigten Ethylenimineinheiten der Struktur N-(CH₂CH₂-)₃.

Ganz besonders bevorzugt besteht die Monomerkomponente (a2) aus mindestens einem Polyethylenimin. Das Molekulargewicht der in Betracht kommenden Polyethylenimine kann in einem weiten Bereich variieren, insbesondere von 500 g/mol bis 3.000.000 g/mol. Vorzugsweise weisen die als Komponente (a2) besonders bevorzugten Polyethylenimine ein gewichtsmittleres Molekulargewicht (Mw) von 500 g/mol bis 500.000 g/mol, vorzugsweise von 800 g/mol bis 200.000 g/mol, besonders bevorzugt von 800 g/mol bis 50.000 g/mol, insbesondere von 1000 g/mol bis 25.000 g/mol, ganz besonders bevorzugt von 1000 g/mol bis 10.000 g/mol, auf.

Das gewichtsmittlere Molekulargewicht von Polyalkylenpolyaminen wird im Rahmen der vorliegenden Erfindung mittels statischer Lichtstreuung bestimmt, worauf sich alle im Rahmen dieser Erfindung genannten Molekulargewichte der Polyalkylenpolyamine und Polyethylenimine beziehen. Hierbei wird zunächst das Brechungsindexinkrement dn/dc durch Differential-Refraktometrie bestimmt. Die Messung durch statische Lichtstreuung erfolgt in einem thermodynamisch guten Lösungsmittel. Der Fachmann wählt die Konzentration des Polyalkylenpolyamins im Lösungsmittel zudem so, dass eine verdünnte Lösung vorliegt. Die Auswertung des Molekulargewichts erfolgt gemäß Auftragung nach Zimm.

Vorzugsweise sind die als Monomerkomponente (a2) besonders bevorzugten Polyethylenimine aus Einheiten aufgebaut, die ausgewählt sind aus terminalen Ethylenimineinheiten der Struktur -(CH₂-CH₂-NH₂), linearen Ethylenimineinheiten der Struktur -(CH₂-CH₂-NH)- und verzweigten Ethylenimineinheiten der Struktur N-(CH₂CH₂-)₃.

Ganz besonders bevorzugt besteht die Monomerkomponente (a2) aus mindestens einem Polyethylenimin. Das Molekulargewicht der in Betracht kommenden Polyethylenimine kann in einem weiten Bereich variieren, insbesondere von 500 g/mol bis 3.000.000 g/mol. Vorzugsweise weisen die als Komponente (a2) besonders bevorzugten Polyethylenimine ein gewichtsmittleres Molekulargewicht (Mw) von 500 g/mol bis 500.000 g/mol, vorzugsweise von 800 g/mol bis 200.000 g/mol, besonders bevorzugt von 800 g/mol bis 50.000 g/mol, insbesondere von 1000 g/mol bis 25.000 g/mol, ganz besonders bevorzugt von 1000 g/mol bis 10.000 g/mol, auf.

Das gewichtsmittlere Molekulargewicht von Polyalkylenpolyaminen wird im Rahmen der vorliegenden Erfindung mittels statischer Lichtstreuung bestimmt, worauf sich alle im Rahmen dieser Erfindung genannten Molekulargewichte der Polyalkylenpolyamine und Polyethylenimine beziehen. Hierbei wird zunächst das Brechungsindexinkrement dn/dc durch Differential-Refraktometrie bestimmt. Die Messung durch statische Lichtstreuung erfolgt in einem thermodynamisch guten Lösungsmittel. Der Fachmann wählt die Konzentration des Polyalkylenpolyamins im Lösungsmittel zudem so, dass eine verdünnte Lösung vorliegt. Die Auswertung des Molekulargewichts erfolgt gemäß Auftragung nach Zimm.

Der Einsatz von Polyethyleniminen mit einem hohen Molekulargewicht beziehungsweise einer hohen Viskosität führt im Allgemeinen zu Gelen beziehungsweise Xerogelen mit besonders guten Eigenschaften, insbesondere hinsichtlich Porosität, Wärmeleitfähigkeit und Festigkeit. Der Einsatz von Polyethyleniminen mit einem niedrigen Molekulargewicht beziehungsweise mit einer niedrigen Viskosität führt im Allgemeinen zu einer besonders einfachen Durchführung des Herstellungsverfahrens bei ausreichend guten Eigenschaften, insbesondere hinsichtlich Porosität, Wärmeleitfähigkeit und Festigkeit.

Die Viskosität der Polyethylenimine liegt im allgemeinen im Bereich von 100 bis 300.000 mPa.s, vorzugsweise im Bereich von 500 bis 200.000 mPa.s, insbesondere von 1000 bis 100.000 mPa.s, ermittelt gemäss DIN EN ISO 2555 (Viskosimeter des Typs RVT der Firma Brookfield, 20°C, 20 Upm).

Polyethylenimine sind beispielsweise nach den Verfahren in Ullmann Electronic Release unter dem Stichwort "Aziridine" oder gemäss WO-A 94/12560 erhältlich.

Die Ethylenimin-Homopolymerisate und Oligomere auf Basis von Ethylenimin sind im allgemeinen durch Polymerisation von Ethylenimin (Aziridin) in wässriger oder organischer Lösung in Gegenwart von säureabspaltenden Verbindungen, Säuren oder LewisSäuren erhältlich. Derartige Homopolymerisate sind lineare oder vorzugsweise verzweigte Polymere. Letztere weisen in der Regel primäre, sekundäre und tertiäre Aminogruppen im Verhältnis von beispielsweise ungefähr 1 : 1 : 0,7 auf. Die Verteilung der Aminogruppen wird mittels ¹³C-NMR Spektroskopie bestimmt.

Sofern als Polyethylenimin Copolymere eingesetzt werden, sind Comonomere bevorzugt, welche mindestens zwei Aminofunktionen aufweisen. Als geeignete Comonomere seien beispielsweise Alkylendiamine mit 2 bis 10 C-Atomen im Alkyenrest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentetramin, Dihexamethylentriamin, Aminopropylethylendiamin und Bisaminopropylethylendiamin.

Vorzugsweise werden als Polyethylenimine jedoch solche eingesetzt, die im Wesentlichen aus Ethylenimin aufgebaut sind, insbesondere Homopolymerisate von Ethylenimin.

Die Polyethylenimine werden vorzugsweise in wasserfreier Form eingesetzt, wobei wasserfrei bedeutet, dass der Wassergehalt von 0 bis 1,5 Gew.-% gemäss DIN 53715 nach Karl Fischer, vorzugsweise von 0 bis 1 Gew.-%, besonders bevorzugt von 0 bis 0,5 Gew.-% beträgt.

In einer besonders bevorzugten Ausführungsform sind die Polyethylenimine hochverzweigt. Unter hochverzweigten Polyethyleniminen werden im Rahmen dieser Erfindung unvernetzte Makromoleküle mit -NH-Gruppen verstanden, die bezüglich ihres strukturellen Aufbaus, insbesondere bezüglich der Länge und Abfolge der Abschnitte zwischen Verzweigungspunkten, uneinheitlich sind. Sie können entweder ausgehend von einem Zentralmolekül analog zu Dendrimeren, jedoch mit uneinheitlicher Kettenlänge der Äste aufgebaut sein. Sie können aber auch linear, mit funktionellen Seitengruppen, aufgebaut sein oder aber, als Kombination der beiden Extreme, lineare und verzweigte Molekülteile aufweisen.

Der Verzweigungsgrad (degree of branching, DB) ist definiert als DB = (T + Z) / (T + Z + L), wobei T die Anzahl der terminalen Monomereinheiten, Z die Anzahl der verzweigten Monomereinheiten, und L die Anzahl der linearen Monomereinheiten, bedeutet und wird üblicherweise in % angegeben. Diese Anzahlen werden mittels ¹³C-Kemresonanzspektren als primäre (ergibt T), tertiäre (ergibt Z) sowie sekundäre (ergibt L) Aminogruppen bestimmt. Zur Definition des degree of branching siehe auch H. Frey et al., Acta Polym. 1997, 48, 30.

### Verfahren zur Herstellung von Xerogelen

Das erfindungsgemäße Verfahren zur Herstellung von Xerogelen auf Basis von mehrfunktionellen Isocyanaten und mehrfunktionellen aliphatischen Aminen umfasst folgende Schritte:
(a) Bereitstellen der Monomerkomponenten (a1) und (a2) in getrennter Form,
(b) Vereinigen der Monomerkomponenten (a1) und (a2) in Gegenwart eines Lösungsmittels (C),
(c) Umsetzung der Monomerkomponenten (a1) und (a2) in Gegenwart des Lösungsmittels (C) zu einem Gel,
(e) Trocknen des im vorigen Schritt erhaltenen Gels durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit.

Vorzugsweise werden die Schritte in der Reihenfolge a-b-c-d(optional)-e durchgeführt. Vorzugsweise dient das erfindungsgemäße Verfahren zur Herstellung der erfindungsgemäßen Xerogele mit einem volumengewichteten mittleren Porendurchmesser von höchstens 5 Mikrometern.

Bevorzugt umfasst das erfindungsgemäße Verfahren weiterhin folgenden Schritt, wobei die Schritte in der Reihenfolge a-b-c-d-e durchgeführt werden:
(d) Modifizierung des erhaltenen Gels mittels mindestens einer organischen Verbindung (D), welche weder in Schritt (a) noch in Schritt (b) zugegen war.

### Schritt (a)

Erfindungsgemäß erfolgt in Schritt (a) das Bereitstellen der Monomerkomponenten (a1) und (a2) in getrennter Form.

Vorzugsweise liegen die primären Aminogruppen der Monomerkomponente (a2) zu Beginn von Schritt (c) geschützt vor. Besonders bevorzugt liegen die primären Aminogruppen der Monomerkomponente (a2) vor Durchführung von Schritt (b) geschützt vor. Ganz besonders bevorzugt wird in Schritt (a) die Monomerkomponente (a2) bereitgestellt, wobei die primären Aminogruppen in geschützter Form vorliegen, insbesondere durch Lösen in einem Mittel zum Schutz primärer Aminogruppen, welches gleichzeitig das Lösungsmittel (C) ist.

Unter geschützt vorliegenden primären Aminogruppen ist zu verstehen, dass die primären Aminogruppen im Wesentlichen nicht in freier Form als -NH₂ vorliegen. Die geschützt vorliegenden primären Aminogruppen der Monomerkomponente (a2) weisen eine verringerte Reaktivität gegenüber Isocyanaten auf. Vorzugsweise liegen die primären Aminogruppen durch reversible Anbindung an mindestens eine weitere funktionelle Gruppe beziehungsweise an mindestens ein weiteres Molekül (sogenannte Schutzgruppen) geschützt vor.

Unter reversibler Anbindung ist dabei zu verstehen, dass die entsprechenden funktionellen Gruppen beziehungsweise Moleküle (Schutzgruppen) zwar die Reaktivität der primären Aminogruppen gegenüber Isocyanaten vermindern, die Reaktion aber nicht vollständig unterdrücken, indem sie entweder vor der Reaktion von primären Aminogruppen mit Isocyanatgruppen gezielt abgespalten werden oder - dies ist bevorzugt - im Fortgang des Schrittes (c) des erfindungsgemäßen Verfahrens reaktive primäre Aminogruppen nachgebildet werden, was zu einer verringerten Reaktionsgeschwindigkeit zwischen primären Aminogruppen mit Isocyanatgruppen führt. Eine solche Nachbildung kann beispielsweise im Rahmen eines Gleichgewichts zwischen geschützter Form und reaktiver freier Form erfolgen.

Besonders bevorzugt liegen die primären Aminogruppen der Monomerkomponente (a2) in Schritt (b) in Form eines Ketimins und/oder eines Aldimins vor. Ganz besonders bevorzugt erfolgt das Bereitstellen der Monomerkomponente (a2) gemäß Schritt (a) des erfindungsgemäßen Verfahrens in Form eines Ketimins und/oder Aldimins.

Darunter ist zu verstehen, dass die primären Aminogruppen der Monomerkomponente (a2) zumindest teilweise, vorzugsweise vollständig, in Form einer Ketimin- und/oder Aldimingruppe vorliegen. Das Ketimin- und/oder Aldimin kann insbesondere durch Verwendung eines Ketons und/oder Aldehyds als Lösungsmittel (C) erhalten werden.

Geeignete Aldimine oder Ketimine leiten sich von Diaminen oder mehrfunktionellen Aminen mit primären Aminogruppen und Aldehyden oder Ketonen ab und können aus diesen Stoffen in an sich bekannter Weise erhalten werden, beispielsweise durch Erwärmen in einem inerten organischen Lösungsmittel, gegebenenfalls unter Entfernung des sich bildenden Wassers, gegebenenfalls katalysiert beispielsweise durch eine Säure, vorzugsweise jedoch durch Umsetzung in einem Überschuss Keton und/oder Aldehyd als Lösungsmittel. Die Aldimine oder Ketimine können darüber hinaus auch noch weitere funktionelle Gruppen enthalten, die gegenüber Isocyanat reaktiv sind, beispielsweise Hydroxyl- oder Iminogruppen.

Des Weiteren kommen Ketimine oder Aldimine in Betracht, die außer geschützen primären Aminogruppen noch freie sekundäre Aminogruppen enthalten, wie zum Beispiel das Diketimin von Diethylentriamin mit Methylisobutylketon.

Sofern die Schutzgruppe durch Zugabe eines Abspaltungsmittels vor oder während der Durchführung des Schrittes (c) abgespalten wird, kann im Fall der Aldimine und Ketimine die Schutzgruppe insbesondere durch Zugabe von Wasser als Abspaltungsmittel abgespalten werden.

Vorzugsweise werden die Aldimine und/oder Ketimine jedoch ohne vorherige Zugabe eines Abspaltungsmittels in einer verlangsamten Reaktion mit Isocyanaten in Schritt (c) des erfindungsgemäßen Verfahrens umgesetzt. Hierbei wird vorzugsweise ein Gleichgewicht zwischen freien und geschützten primären Aminogruppen im Lösungsmittel (C) ausgenutzt.

Die Umsetzungsprodukte zwischen mehrfunktionellen Aldiminen und/oder Ketiminen und Polyisocyanaten sind an sich chemisch identisch oder weitgehend identisch zu denen einer direkten Umsetzung von Aminogruppen und Isocyanatgruppen. Allerdings wird durch die Verringerung der Reaktionsgeschwindigkeit von primären aliphatischen Aminogruppen und Isocyanatgruppen insbesondere die Porenstruktur des in Schritt (c) resultierenden Gels positiv beeinflusst.

Vorzugsweise sind die reversibel mit primären Aminen reagierenden Schutzgruppen unter den Versuchsbedingungen flüssig. Vorzugsweise werden die Schutzgruppen in Form eines gegenüber primären Aminogruppen reaktiven Lösungsmittels (C) eingesetzt.

Ganz besonders bevorzugt wird in Schritt (a) die Monomerkomponente (a2) gelöst in einem Keton und/oder Aldehyd als Lösungsmittel (C) bereitgestellt und in Schritt (b) mit der Monomerkomponente (a1) vereinigt.

Aldehyde oder Ketone, die zur Herstellung der Aldimine oder Ketimine verwendet werden können sind insbesondere solche entsprechend der allgemeinen Formel R²-(CO)-R¹, wobei R¹ und R² Wasserstoff oder Alkylgruppen mit 1,2,3 oder 4 Kohlenstoffatomen sind. Geeignete Aldehyde oder Ketone sind insbesondere Acetaldehyd, Propionaldehyd, n-Butyraldehyd, Isobutyraldehyd, 2-Ethylbutyraldehyd, Valeraldehyd, Isopentaldehyd, 2-Methylpentaldehyd, 2-Ethylhexaldehyde, Acrolein, Methacrolein, Crotonaldehyd, Furfural, Acroleindimer, Methacroelindimer, 1,2,3,6-Tetrahydrobenzaldehyd, 6-Methyl-3-cyclohexenaldehyd, Cyanacetaldehyd, Glyoxynsäureethylester, Benzaldehyd, Aceton, Methylisobutylketon, Diethylketon, Methylethylketon, Methylisobutylketon, Methyl-n-butylketon, Ethylisopropylketon, 2-Acetylfuran, 2-Methoxy-4-methylpentan-2-on, Cyclohexanon und Acetophenon. Die vorgenannten Aldehyde und Ketone können auch in Form von Mischungen eingesetzt werden.

Grundsätzlich ist eine Herstellung eines Aldimins oder Ketimins vorab in Reinform sowie anschließendem Bereitstellen als Lösung in einem Lösungsmittel (C) möglich. Vorzugsweise werden im erfindungsgemäßen Verfahren die vorgenannten Aldehyde und/oder Ketone jedoch als Lösungsmittel (C) eingesetzt, wobei die Bildung des Aldimins oder Ketimins beim Lösen der Komponente (a2) erfolgt.

Es ist wünschenswert, dass der Aldehyd oder das Keton einen Siedpunkt unter etwa 180°C besitzt, so dass es aus dem Polymer während der Abbindungsstufe leicht entweichen kann.

Vorzugsweise werden die Monomerkomponenten (a1) und (a2) getrennt voneinander in einem Lösungsmittel (C), insbesondere einem Aldehyd und/oder Keton, gelöst. Geeignete Lösungsmittel (C) sind insbesondere solche Aldehyde und/oder Ketone, in denen beide Komponenten (a1) und (a2) eine ausreichende Löslichkeit aufweisen und in denen sich durch Umsetzung mit den primären Aminogruppen der Monomerkomponente (a2) ein Aldimin und/oder Ketimin bildet, vorzugsweise bei Raumtemperatur.

Prinzipiell können die beiden Monomerkomponenten (a1) und (a2) in unterschiedlichen Lösungsmitteln (c1) und (c2) gelöst werden, sofern die Lösungsmittel vollständig miteinander mischbar sind und die beiden Komponenten (a1) und (a2) im Lösungsmittelgemisch jeweils eine ausreichende Löslichkeit aufweisen.

Die Viskosität der eingesetzten Komponente (a1) kann in einem weiten Bereich variieren. Vorzugsweise weist die in Schritt (a) des erfindungsgemäßen Verfahrens eingesetzte Komponente (a1) eine Viskosität von 100 bis 3000 mPa.s, besonders bevorzugt von 200 bis 2500 mPa.s, auf.

### Schritt (b)

Erfindungsgemäß erfolgt in Schritt (b) das Vereinigen der Monomerkomponenten (a1) und (a2) in Gegenwart eines Lösungsmittel (C). Die Monomerkomponenten (a1) und (a2), die im folgenden zusammen als Gelvorstufe (A) bezeichnet werden, werden vorzugsweise vollständig gemischt. Die Gelvorstufe (A) enthält somit die weiter oben im Rahmen des Xerogels beschriebenen Monomerkomponenten (a1) und (a2) in den ebenfalls weiter oben im Rahmen des Xerogels beschriebenen Mengenanteilen.

Die Monomerkomponenten (a1) und (a2) liegen in der Gelvorstufe (A) in niedermolekularer, oligomerer oder polymerer Form vor oder wurden vorab durch teilweise oder nicht-äquimolare Umsetzung von Isocyanat- und Aminogruppen in ein Präpolymer umgewandelt, das gegebenenfalls zusammen mit weiteren Monomerkomponenten (a1) oder (a2) die Gelvorstufe (A) bildet.

Der Begriff Gelvorstufe (A) kennzeichnet die gelierbare Mischung aus den Komponenten (a1) und (a2). Die Gelvorstufe (A) wird anschließend in Schritt (c) des erfindungsgemäßen Verfahrens in Gegenwart des Lösungsmittels (C) zu einem Gel, ein vernetztes Polymer, umgesetzt. Die Mengenanteile der Monomerkomponenten (a1) und (a2) im Xerogel, worin sie in polymerer (umgesetzter) Form vorliegen, entsprechen den Mengenanteilen der Monomerkomponenten (a1) und (a2) in der Gelvorstufe (A), worin sie in noch nicht umgesetzter monomerer Form vorliegen, sofern die Komponenten vollständig in das Xerogel eingebaut werden. Beispielsweise kann bei Vorliegen eines großen Überschusses einer der Komponenten bei fehlenden funktionellen Gruppen als Reaktionspartner die Überschusskomponente teilweise in nicht umgesetzter (monomerer) Form in der Lösung verbleiben.

In Schritt (b) des erfindungsgemäßen Verfahrens stellt man somit eine Mischung enthaltend die Gelvorstufe (A) in einem flüssigen Verdünnungsmittel her. Der Begriff Lösungsmittel (C) umfasst im Rahmen der vorliegenden Erfindung flüssige Verdünnungsmittel, das heißt sowohl Lösungsmittel im engeren Sinne als auch Dispersionsmittel. Die Mischung kann insbesondere eine echte Lösung, eine kolloidale Lösung oder eine Dispersion, z.B. eine Emulsion oder Suspension, sein. Bevorzugt ist die Mischung eine echte Lösung. Das Lösungsmittel (C) ist eine unter den Bedingungen des Schrittes (c) flüssige Verbindung, vorzugsweise ein organisches Lösungsmittel.

Das Äquivalenzverhältnis (Zahlen- beziehungsweise Molverhältnis) von eingesetzten NCO-Gruppen der Monomerkomponenten (a1) zu den eingesetzten reaktiven, d.h. primären geschützten und sekundären Aminogruppen der Monomerkomponente (a2) beträgt bevorzugt von 0,7 (NCO-Gruppen-Unterschuss) bis 1,7 (NCO-Gruppen-Überschuss), insbesondere von 0,9 bis 1,6.

Besonders bevorzugt beträgt das Äquivalenzverhältnis von NCO-Gruppen aus der Monomerkomponente (a1) zu reaktiven Aminogruppen aus der Monomerkomponente (a2) von 1 bis 1,6 und insbesondere von 1,1 bis 1,5. Bei bekannter Funktionalität beziehungsweise bei bekanntem strukturellem Aufbau, beispielsweise in Form der Monomereinheiten und des Verhältnisses primärer zu sekundären zu tertiären Aminogruppen, sowie dem Molekulargewicht kann der Fachmann die Äquivalenzverhältnisse von NCO- zu Aminogruppen und die Gewichtsverhältnisse der eingesetzten Komponenten (a1) und (a2) ineinander umrechnen.

Es ist dem Fachmann bekannt, dass Amine, beispielsweise aromatische Diamine, entstehen, wenn man entsprechende Isocyanate, beispielsweise aromatische Diisocyanate, mit Wasser umsetzt. Demzufolge ist es möglich, an Stelle von mehrfunktionellen Aminen entsprechende mehrfunktionelle Isocyanate und eine äquivalente Menge an Wasser als Komponente (a2) einzusetzen, so dass die gewünschte Menge an mehrfunktionellem Amin in situ oder im Rahmen einer Vorabumsetzung entsteht. Bei einem Überschuss der Komponente (a1) und gleichzeitiger Zugabe von Wasser kann die Komponente (a2) in situ anteilmäßig zur Komponente (a2) umgesetzt werden, welche dann unmittelbar mit der verbleibenden Komponente (a1) unter Bildung von Hamstoff-Verknüpfungen reagiert.

Bevorzugt wird das mehrfunktionelle Amin als Monomerkomponente (a2) jedoch nicht aus der Monomerkomponente (a1) erzeugt, sondern wird separat als Komponente (a2) zugegeben. Demzufolge ist bei der Durchführung der Schritte a bis c vorzugsweise weitgehend kein Wasser, insbesondere kein Wasser, zugegen.

Als Lösungsmittel (C) kommen prinzipiell eine oder ein Gemisch aus mehreren Verbindungen in Betracht, wobei das Lösungsmittel (C) bei den Temperatur- und Druckbedingungen, unter denen die Mischung in Schritt (a) bereitgestellt wird (kurz: Lösungsbedingungen), flüssig ist. Die Zusammensetzung des Lösungsmittels (C) wird so gewählt, dass es in der Lage ist, die organische Gelvorstufe zu lösen oder zu dispergieren, bevorzugt zu lösen. Bevorzugte Lösungsmittel (C) sind solche, die ein Lösungsmittel für die organische Gelvorstufe (A) sind, d. h. solche, die die organische Gelvorstufe (A) unter Reaktionsbedingungen vollständig lösen.

Das Reaktionsprodukt aus Schritt (c) ist ein Gel, d. h. ein viskoelastisches chemisches Netzwerk, das durch das Lösungsmittel (C) gequollen ist. Ein Lösungsmittel (C), welches ein gutes Quellmittel für das in Schritt (b) gebildete Netzwerk darstellt (dies ist bevorzugt), führt in der Regel zu einem Netzwerk mit feinen Poren und kleinem mittleren Porendurchmesser, wohingegen ein Lösungsmittel (C), welches ein schlechtes Quellmittel für das aus Schritt (b) resultierende Gel darstellt, in der Regel zu einem grobporigen Netzwerk mit großem mittleren Porendurchmesser führt.

Die Wahl des Lösungsmittels (C) beeinflusst somit die angestrebte Porengrößenverteilung und die angestrebte Porosität. Die Wahl des Lösungsmittels (C) erfolgt im Allgemeinen zudem so, dass ein Ausfällen oder Ausflocken durch Bildung eines präzipitierten Reaktionsproduktes während oder nach Schritt (b) des erfindungsgemäßen Verfahrens weitestgehend nicht auftritt.

Bei Wahl eines geeigneten Lösungsmittels (C) ist der Anteil an präzipitiertem Reaktionsprodukt üblicherweise kleiner als 1 Gew.-%, bezogen auf das Gesamtgewicht der Mischung. Die Menge an gebildetem präzipitiertem Produkt in einem bestimmten Lösungsmittel (C) kann gravimetrisch bestimmt werden, indem die Reaktionsmischung vor dem Gelpunkt über ein geeignetes Filter filtriert wird.

Als Lösungsmittel (C) kommen im Prinzip die aus dem Stand der Technik bekannten Lösungsmittel für Isocyanat-basierte Polymere in Frage. Bevorzugte Lösungsmittel sind dabei solche, die ein Lösungsmittel für beide Komponenten, (a1) und (a2) sind, d. h. solche, die die Komponenten (a1) und (a2) unter Reaktionsbedingungen des Schrittes (c) weitgehend vollständig lösen, so dass der Gehalt der organischen Gelvorstufe (A) in der gesamten in Schritt (a) bereitgestellten Mischung einschließlich des Lösungsmittels (C) bevorzugt mindestens 5 Gew.-% beträgt. Bevorzugt ist das Lösungsmittel (C) gegenüber Komponente (a1) inert, d. h. nicht reaktiv.

Als Lösungsmittel (C) kommen im Prinzip Dialkylether, zyklische Ether, Aldehyde, Ketone, Alkylalkanoate, Amide wie Formamid und N-Methylpyrollidon, Sulfoxide wie Dimethylsulfoxid, aliphatische und cycloaliphatische halogenierte Kohlenwasserstoffe, halogenierte aromatische Verbindungen und fluorhaltige Ether in Betracht. Ebenso in Betracht kommen Mischungen aus zwei oder mehreren der vorgenannten Verbindungen.

Sofern als Lösungsmittel (C) Ether eingesetzt werden, dann sind Dialkylether und zyklische Ether sind als Lösungsmittel (C) bevorzugt. Bevorzugte Dialkylether sind insbesondere solche mit 2 bis 6 Kohlenstoffatomen, insbesondere Methylethylether, Diethylether, Methyl-Propylether, Methyl- Isopropylether, Propyl-Ethylether, Ethyl-Isopropylether, Dipropylether, Propyl-Isopropylether, Diisopropylether, Methyl-Butylether, Methyl-Isobutylether, Methyl-t-Butylether, Ethyl-n-Butylether, Ethyl-Isobutylether und Ethyl-t-Butylether. Bevorzugte zyklische Ether sind insbesondere Tetrahydrofuran, Dioxan und Tetrahydropyran.

Als Lösungsmittel (C) kommen außerdem Alkylalkanoate in Betracht, insbesondere Methylformiat, Methylacetat, Ethylformiat, Butylacetat und Ethylacetat. Bevorzugte halogenierte Lösungsmittel sind in der WO 00/24799, Seite 4, Zeile 12 bis Seite 5, Zeile 4 beschrieben.

In vielen Fällen ergeben sich besonders geeignete Lösungsmittel (C), indem man zwei oder mehrere miteinander vollständig mischbare Verbindungen, ausgewählt aus den vorgenannten oder den weiter unten genannten Lösungsmitteln, in Form eines Gemisches einsetzt.

Aufgrund ihrer Funktion als Mittel zum Schutz primärer Aminogruppen sind Ketone und Aldehyde, insbesondere Ketone als Lösungsmittel (C) besonders bevorzugt. Ganz besonders bevorzugte Lösungsmittel (C) sind im Rahmen von Schritt (c) Aldehyde und/oder Ketone, insbesondere Ketone, die bereits im Rahmen von Schritt (a) des erfindungsgemäßen Verfahrens eingesetzt wurden. Hierdurch kann Schritt (b) vorteilhaft durch Vereinigung der in Schritt (a) bereitgestellten Monomerkomponenten in Aldehyden und/oder Ketonen als Lösungsmittel (C) erfolgen, und eine weitere Zugabe eines weiteren Lösungsmittels (C) im Rahmen von Schritt (b) oder (c) kann unterbleiben.

Aldehyde oder Ketone als Lösungsmittel (C) sind vorzugsweise solche entsprechend der allgemeinen Formel R²-(CO)-R¹, wobei R¹ und R² Wasserstoff oder Alkylgruppen mit 1,2,3 oder 4 Kohlenstoffatomen sind. Geeignete Aldehyde oder Ketone sind insbesondere Acetaldehyd, Propionaldehyd, n-Butyraldehyd, Isobutyraldehyd, 2-Ethylbutyraldehyd, Valeraldehyd, Isopentaldehyd, 2-Methylpentaldehyd, 2-Ethylhexaldehyde, Acrolein, Methacrolein, Crotonaldehyd, Furfural, Acroleindimer, Methacroelindimer, 1,2,3,6-Tetrahydrobenzaldehyd, 6-Methyl-3-cyclohexenaldehyd, Cyanacetaldehyd, Glyoxynsäureethylester, Benzaldehyd, Aceton, Methylisobutylketon, Diethylketon, Methylethylketon, Methylisobutylketon, Methyl-n-butylketon, Ethylisopropylketon, 2-Acetylfuran, 2-Methoxy-4-methylpentan-2-on, Cyclohexanon und Acetophenon. Die vorgenannten Aldehyde und Ketone können auch in Form von Mischungen eingesetzt werden.

Ketone mit Alkylgruppen mit bis zu 3 Kohlenstoffatomen pro Substituent sind als Lösungsmittel (C) besonders bevorzugt. Ganz besonders bevorzugt sind als Lösungsmittel (C) folgende Ketone: Aceton, Cyclohexanon, Methyl-t-Butylketon und MethylEthylketon.

Gemäß der weiter oben beschriebenen bevorzugten Ausführungsform wird durch Lösen der Komponente (a2) im Lösungsmittel (C) ein Aldimin und/oder Ketimin erzeugt. Im Rahmen dieser Ausführungsform werden die entsprechenden Aldehyde und/oder Ketone vorzugsweise als Lösungsmittel (C) eingesetzt. Als Lösungsmittel (C) besonders bevorzugte Aldehyde und Ketone wurden weiter oben ausgeführt.

Um in Schritt (c) ein ausreichend stabiles Gel zu erhalten, das bei der Trocknung in Schritt (e) nicht stark schrumpft, darf der Anteil der Gelvorstufe (A) an der gesamten, in Schritt (b) des erfindungsgemäßen Verfahrens hergestellten Mischung einschließlich des Lösungsmittels (C) im Allgemeinen nicht weniger als 5 Gew.-% betragen. Bevorzugt beträgt der Anteil der Gelvorstufe (A) an der gesamten, in Schritt (b) des erfindungsgemäßen Verfahrens bereitgestellten Mischung einschließlich des Lösungsmittels (C) mindestens 8 Gew.-%, besonders bevorzugt mindestens 10 Gew.-%, insbesondere mindestens 13 Gew.-%.

Andererseits darf die Konzentration der Monomerkomponenten in der bereitgestellten Mischung nicht zu hoch gewählt werden, da ansonsten kein Xerogel mit günstigen Eigenschaften erhalten wird. Im allgemeinen beträgt der Anteil der Gelvorstufe (A) an der gesamten, in Schritt (b) des erfindungsgemäßen Verfahrens hergestellten und in Schritt (c) eingesetzten Mischung einschließlich des Lösungsmittels (C) höchstens 40 Gew.-%. Bevorzugt beträgt der Anteil der Gelvorstufe (A) an der gesamten, in Schritt (c) des erfindungsgemäßen Verfahrens eingesetzten Mischung einschließlich des Lösungsmittels (C) höchstens 30 Gew.-%, besonders bevorzugt höchstens 20 Gew.-%, insbesondere höchstens 18 Gew.-%.

Es hat sich als besonders günstig hinsichtlich der Eigenschaften der resultierenden Xerogele erwiesen, das Äquivalenzverhältnis von NCO-Gruppen der Monomerkomponente (a1) zu reaktiven Aminogruppen der Monomerkomponente (a2) in der Gelvorstufe (A) einerseits und den Anteil der Gelvorstufe (A) an der gesamten, in Schritt (c) des erfindungsgemäßen Verfahrens eingesetzten Mischung andererseits aufeinander abzustimmen.

In einer besonders bevorzugten ersten Ausführungsform beträgt das Äquivalenzverhältnis von NCO-Gruppen der Monomerkomponente (a1) zu reaktiven Aminogruppen der Monomerkomponente (a2) von 0,7 bis 1,2; insbesondere von 0,8 bis 1,15, und der Anteil der Gelvorstufe (A) an der gesamten, in Schritt (c) des erfindungsgemäßen Verfahrens eingesetzten Mischung einschließlich des Lösungsmittels (C) beträgt gleichzeitig von 7 bis 14 Gew.-%, insbesondere von 8 bis 13 Gew.-%.

In einer besonders bevorzugten zweiten Ausführungsform beträgt das Äquivalenzverhältnis von NCO-Gruppen der Monomerkomponente (a1) zu reaktiven Aminogruppen der Monomerkomponente (a2) von 1,1 bis 1,45, insbesondere von mehr als 1,15 bis 1,4, und der Anteil der Gelvorstufe (A) an der gesamten, in Schritt (c) des erfindungsgemäßen Verfahrens eingesetzten Mischung einschließlich des Lösungsmittels (C) beträgt von 9 bis 17 Gew.-%, insbesondere von 11 bis 16 Gew.-%.

In einer besonders bevorzugten dritten Ausführungsform beträgt das Äquivalenzverhältnis von NCO-Gruppen der Monomerkomponente (a1) zu reaktiven Aminogruppen der Monomerkomponente (a2) von 1,3 bis 1,7, insbesondere von mehr als 1,4 bis 1,6 und der Anteil der Gelvorstufe (A) an der gesamten, in Schritt (c) des erfindungsgemäßen Verfahrens eingesetzten Mischung einschließlich des Lösungsmittels (C) beträgt von 12 bis 20 Gew.-%, insbesondere 13 bis 18 Gew.-%.

Optional enthält die in Schritt (b) bereitgestellte Mischung als weitere Komponente (B) noch mindestens einen Katalysator (b1). Vorzugsweise wird die Umsetzung der Gelvorstufe (A) jedoch ohne Anwesenheit eines Katalysators durchgeführt.

Sofern ein Katalysator (b1) eingesetzt wird, werden üblicherweise Trimerisationskatalysatoren verwendet, welche die Bildung von Isocyanuraten katalysieren. Als solche Trimerisationskatalysatoren können zum Beispiel dem Fachmann weitläufig bekannte, zum Beispiel die im folgenden ausgeführten, verwendet werden.

Sofern Trimerisationskatalysatoren als Komponente (b1) eingesetzt werden, sind bekannte Katalysatoren wie quaternäre Ammoniumhydroxide, Alkalimetall- und Erdalkalimetallhydroxide, -alkoxide und -carboxylate, z.B. Kaliumacetat und Kalium-2-ethyl-hexanoat, bestimmte tertiäre Amine und nicht-basische Metallcarboxylate, z.B. Bleioktoat und Triazinderivate, insbesondere symmetrische Triazinderivate, geeignet. Triazinderivate, insbesondere Hexahydrotriazin, sind als Trimerisationskatalysatoren besonders geeignet.

Die in Schritt (b) hergestellte Mischung kann außerdem übliche, dem Fachmann bekannte Hilfsmittel als weitere Bestandteile (B) enthalten. Genannt seien beispielsweise oberflächenaktive Substanzen, Flammschutzmittel, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel und Biozide.

Nähere Angaben über die oben genannten Hilfsmittel- und Zusatzstoffe sind der Fachliteratur zu entnehmen, z.B. aus Plastics Additive Handbook, 5th edition, H. Zweifel, ed, Hanser Publishers, München, 2001.

Das Vereinigen der Komponenten (a1) und (a2) in Gegenwart des Lösungsmittels (C) gemäß Schritt (b) des erfindungsgemäßen Verfahrens kann auf übliche Weise erfolgen. Bevorzugt wird dazu ein Rührer oder eine andere Mischvorrichtung eingesetzt, um eine gute Durchmischung zu erzielen. Die sonstigen Mischbedingungen sind in der Regel nicht kritisch, beispielsweise kann man bei 0 bis 100°C und 0,1 bis 10 bar (absolut), insbesondere z.B. bei Raumtemperatur und Atmosphärendruck, mischen.

Die in Schritt (b) hergestellte Mischung kann auch als Sol bezeichnet werden. Es soll dabei unter einem Sol sowohl eine kolloidale Lösung verstanden werden, in der die organische Gelvorstufe (A) feinstverteilt in einem Lösungsmittel als Dispersionsmedium dispergiert ist, oder um eine echte Lösung der organischen Gelvorstufe (A) in einem Lösungsmittel.

### Schritt (c)

Erfindungsgemäß erfolgt in Schritt (c) die Umsetzung der Gelvorstufe (A) in Gegenwart des Lösungsmittels (C) zu einem Gel. In Schritt (c) des erfindungsgemäßen Verfahrens wird somit die organische Gelvorstufe (A) in einer Gelierungsreaktion zu einem Gel umgesetzt. Bei der Gelierungsreaktion handelt es sich um eine Polyadditionsreaktion, insbesondere um eine Polyaddition von Isocyanatgruppen und Aminogruppen.

Unter einem Gel soll ein vernetztes System auf Basis eines Polymers verstanden werden, das in Kontakt mit einer Flüssigkeit (sog. Solvogel oder Lyogel, bzw. mit Wasser als Flüssigkeit: Aquagel oder Hydrogel) vorliegt. Dabei bildet die Polymerphase ein kontinuierliches räumliches Netzwerk.

Im Rahmen von Schritt (c) des erfindungsgemäßen Verfahrens entsteht das Gel üblicherweise durch Ruhenlassen, z.B. durch einfaches Stehenlassen des Behälters, Reaktionsgefäßes oder Reaktors, in dem sich die Mischung befindet (im folgenden Geliervorrichtung genannt). Bevorzugt wird während des Gelierens (Gelbildung) die Mischung nicht gerührt oder durchmischt, weil dies die Ausbildung des Gels behindern könnte. Es hat sich als vorteilhaft erwiesen, die Mischung während des Gelierens abzudecken bzw. die Geliervorrichtung zu verschließen.

Die Dauer des Gelierens variiert je nach Art und Menge der eingesetzten Komponenten und der Temperatur und kann mehrere Tage betragen. Üblicherweise beträgt sie von 5 Sekunden bis 10 Tage, bevorzugt weniger als 3 Stunden, insbesondere von 10 Sekunden bis 2 Stunden, besonders bevorzugt höchstens 1 Stunde, insbesondere von 15 Sekunden bis 1 Stunde.

Die Gelierung kann dabei ohne Wärmezuführung bei einer Temperatur im Bereich der Raumtemperatur durchgeführt werden, insbesondere von 15 bis 25 °C, oder bei einer gegenüber der Raumtemperatur erhöhten Temperatur, die 20°C oder mehr beträgt, insbesondere von 25°C bis 80°C. Üblicherweise verkürzt eine höhere Gelierungstemperatur die Dauer der Gelierung. Eine höhere Gelierungstemperatur ist jedoch nicht in allen Fällen vorteilhaft, da eine erhöhte Gelierungstemperatur zu Gelen mit unzureichenden mechanischen Eigenschaften führen kann. Vorzugsweise wird die Gelierung bei einer Temperatur im Bereich der Raumtemperatur durchgeführt, insbesondere von 15°C bis 25°C.

Der Druck beim Gelieren kann in einem weiten Bereich variieren und ist im Allgemeinen nicht kritisch. Er kann beispielsweise von 0,1 bar bis 10 bar betragen, bevorzugt 0,5 bar bis 8 bar und insbesondere 0,9 bis 5 bar (jeweils absolut). Insbesondere kann man wässrige Mischungen bei Raumtemperatur und Atmosphärendruck gelieren lassen.

Während des Gelierens erstarrt die Mischung zu einem mehr oder weniger formbeständigen Gel. Daher kann man die Gelbildung in einfacher Weise daran erkennen, dass sich der Inhalt der Geliervorrichtung nicht mehr bewegt, wenn die Geliervorrichtung oder ein Behälter, mit dem eine Probe entnommen wurde, langsam schräggestellt wird. Außerdem ändern sich bei der Gelierung die akustischen Eigenschaften der Mischung: die gelierte Mischung ergibt beim Klopfen auf die äußere Wand der Geliervorrichtung einen anderen, brummenden Klang als die noch nicht gelierte Mischung (sog. Brummgel).

In einer bevorzugten Ausführungsform wird das bei der Gelierung in Schritt (c) erhaltene Gel vor der Durchführung von Schritt (d), beziehungsweise, sofern Schritt (d) nicht ausgeführt wird, vor der Durchführung von Schritt (e) noch einer sogenannten Alterung unterworfen, bei der sich die Ausbildung des Gels vervollständigt. Die Alterung erfolgt insbesondere dadurch, dass man das Gel einige Zeit einer höheren Temperatur aussetzt als bei der vorangegangenen Gelierung. Dazu kann man beispielsweise ein Temperierbad oder einen Wärmeschrank verwenden oder die Vorrichtung oder Umgebung, in der sich das Gel befindet, in geeigneter Weise erwärmen.

Die Temperatur bei der Alterung kann in einem weiten Bereich variieren und ist an sich nicht kritisch. Im Allgemeinen altert man bei Temperaturen von 30°C bis 150°C, bevorzugt von 40°C bis 100°C. Die Alterungs-Temperatur sollte im Bereich von 10°C bis 100°C, insbesondere von 20°C bis 80°C über der Gelierungstemperatur liegen. Wurde bei Raumtemperatur geliert, so kann man insbesondere bei Temperaturen von 40°C bis 80°C, bevorzugt bei etwa 60°C altem. Der Druck bei der Alterung ist unkritisch und beträgt üblicherweise von 0,9 bis 5 bar (absolut).

Die Dauer der Alterung ist abhängig von der Art des Gels und kann wenige Minuten dauern, aber auch lange Zeit in Anspruch nehmen. Die Dauer der Alterung kann beispielsweise bis zu 30 Tagen betragen. Üblicherweise beträgt die Dauer der Alterung von 10 Minuten bis 12 Stunden, bevorzugt von 20 Minuten bis 6 Stunden und besonders bevorzugt von 30 Minuten bis 5 Stunden.

Je nach Art und Zusammensetzung kann das Gel während der Alterung geringfügig schrumpfen und sich dabei von der Wandung der Geliervorrichtung ablösen. Vorteilhaft deckt man das Gel während der Alterung ab bzw. verschließt die Geliervorrichtung, in der sich das Gel befindet.

### Schritt (d)

In einer optionalen, bevorzugten Ausführungsform erfolgt in Schritt (d) des erfindungsgemäßen Verfahrens eine Modifizierung des in Schritt (c) erhaltenen Gels mittels mindestens einer organischen Verbindung (D), welche weder in den Schritten (a) und (b) noch in Schritt (c) zugegen war.

Die organische Verbindung (D) kann sowohl ausschließlich aus Nichtmetallen aufgebaut sein als auch Halbmetalle oder Metalle enthalten. Die organischen Verbindungen (D) enthalten vorzugsweise jedoch keine Metalle und keine Halbmetalle wie Silicium. Bevorzugt enthält die organische Verbindung (D) reaktive funktionelle Gruppen, die gegenüber dem in Schritt (c) erhaltenen Gel reaktiv sind.

Die Modifizierung verringert bevorzugt die Verträglichkeit des erhaltenen Gels, insbesondere die Verträglichkeit der Porenoberfläche des Gels, mit dem Lösungsmittel (C). Die Verbindung (D) ist somit bevorzugt eine Verbindung, welche mit der Porenoberfläche des Gels aus Schritt (c) in Kontakt kommt und dort verbleibt, wobei die Verträglichkeit des erhaltenen Gels mit dem Lösungsmittel (C) verringert wird. Unter Verringerung der Verträglichkeit ist zu verstehen, dass die anziehende Wechselwirkung zwischen dem Gel und der mit dem Gel in Kontakt befindlichen flüssigen Phase verringert wird. Somit handelt es sich im Rahmen der vorliegenden Erfindung bei der Verträglichkeit um eine thermodynamische Verträglichkeit, wobei bei abnehmender Verträglichkeit eine zunehmende mikroskopische Trennung erfolgt, das heißt die Komponenten besitzen bei einer verringerten Verträglichkeit eine verringerte Tendenz, sich auf molekularer Ebene zu durchdringen, insbesondere in Form einer Quellung des Gels durch das Lösungsmittel (C). Unter Verträglichkeit von Gel und Lösungsmittel (C) ist die Stärke der physikalisch-chemischen Interaktion zwischen der Porenoberfläche des Gels und dem Lösungsmittel zu verstehen. Sie wird bestimmt durch physikalisch-chemische Wechselwirkungen wie zum Beispiel der Wechselwirkung zwischen apolaren Verbindungen beziehungsweise Dipol-Dipol-Wechselwirkungen oder Wasserstoffbrücken.

Als Verbindung (D) sind im Rahmen des erfindungsgemäßen Verfahrens grundsätzlich solche organischen Verbindungen bevorzugt, die gegenüber dem Lösungsmittel (C) nicht reaktiv sind. Gegenüber dem Lösungsmittel (C) nicht reaktiv bedeutet, dass die Verbindung (D) mit dem Lösungsmittel keine chemische Reaktion eingeht und insbesondere durch das Lösungsmittel (C) nicht hydrolysiert beziehungsweise nicht solvolysiert wird.

Unter Modifizierung des Gels soll jede Maßnahme verstanden werden, bei der die Porenoberfläche des Gels durch mindestens eine Verbindung (D) modifiziert wird. Bevorzugt erfolgt die Modifizierung durch eine chemische Umsetzung zwischen der Verbindung (D) und dem Gel (im folgenden chemische Modifizierung genannt), insbesondere im Bereich der Porenoberfläche des Gels. Grundsätzlich kann die Modifizierung auch durch physikalisch-chemische Wechselwirkungen erfolgen, die nicht durch eine chemische Umsetzung im eigentlichen Sinn zustande kommen, insbesondere durch Wasserstoffbrücken oder andere intermolekulare Wechselwirkungen, beispielsweise ionische Wechselwirkungen und Donor-Akzeptor-Wechselwirkungen, so dass hier keine chemische Modifizierung vorliegt. Die physikalisch-chemischen Wechselwirkungen müssen dabei zumindest so stark sein, dass die Verträglichkeit des so modifizierten Gels mit dem Lösungsmittel verändert wird. Bevorzugt erfolgt in Schritt (d) jedoch eine chemische Modifizierung des erhaltenen Gels.

Als Porenoberfläche wird dabei derjenige Bereich des Gels angesehen, der durch die Verbindung (D) zugänglich ist, das heißt, entweder an der Grenzfläche zwischen Gel und Flüssigkeit liegt oder durch die in den Poren des Gels enthaltene Flüssigkeit erreichbar ist, insbesondere durch Quellung.

Die Verträglichkeit wird im Rahmen dieser bevorzugten Ausführungsform bevorzugt bestimmt, indem man das Gel bis zum Zeitpunkt des Erreichens des Endpunktes der Quellung mit dem Lösungsmittel (C) in Kontakt bringt und das Quellvermögen bestimmt. Die Verringerung des Quellvermögens dient dabei zur Charakterisierung der Verringerung der Verträglichkeit des Gels mit dem Lösungsmittel (C). Die erfindungsgemäße Modifizierung des erhaltenen Gels mittels mindestens einer organischen Verbindung (D) in Schritt (d) des erfindungsgemäßen Verfahrens verringert bevorzugt das Quellvermögen des Gels im Lösungsmittel (C). Unter Verringerung des Quellvermögens (QV) ist QV = (Vₚₛ - Vo) / V₀ zu verstehen, wobei Vₚₛ das partielle spezifische Volumen des Polymers im Gel unter gequollenen Bedingungen und V₀ das spezifische Volumen im ungequollenen Trockenzustand ist. Die spezifischen Volumina können beispielsweise durch Pyknometrie nach DIN 66137 bestimmt werden.

Durch die verringerte Verträglichkeit verstärkt sich die Phasenseparation von Polymer und Lösungsmittel. Hieraus resultiert im Allgemeinen ein vergrößertes Porenvolumen und eine erhöhte Porosität nach der Trocknung des modifizierten Gels im Vergleich zum nicht-modifizierten Gel.

Das Quellvermögen kann zum Vergleich der Verträglichkeit zwischen unter ansonsten identischen Bedingungen erhältlichen Gelen eingesetzt werden, um so den Einfluss der Modifizierung des Gels in Schritt (d) des erfindungsgemäßen Verfahrens zu bestimmen.

Die Modifizierung des Gels erfolgt bevorzugt durch Reaktion mit chemischen Gruppen im Bereich der Porenoberfläche des Gels (chemische Modifizierung). Bei einer chemischen Modifizierung des Gels kann gleichzeitig eine Vernetzung im Bereich der Porenoberfläche erfolgen, falls eine Verbindung (D) eingesetzt wird, die mehr als eine reaktive funktionelle Gruppe beinhaltet.

Sofern das erhaltene Gel noch reaktive Isocyanatgruppen enthält, insbesondere im Falle eines Überschusses an NCO-Gruppen gegenüber reaktiven Aminogruppen in der Gelvorstufe (A), kommen als Verbindung (D) bevorzugt Amine in Betracht, die gegenüber Isocyanaten reaktiv sind und durch deren Umsetzung mit dem Gel eine verringerte Verträglichkeit des resultierenden Gels mit dem Lösungsmittel resultiert. Hierbei kommen als Verbindung (D) vorzugsweise Amine in Betracht, die eine zum Lösungsmittel entgegengesetzte Polarität aufweisen und gegenüber Isocyanaten reaktiv sind.

Unter entgegengesetzter Polarität soll dabei eine entgegengesetzte Richtung der Polarität verstanden werden und kein absoluter Betrag. Durch die Modifizierung mit mindestens einer Verbindung (D) mit entgegengesetzter Polarität in Schritt (c) des erfindungsgemäßen Verfahrens wird die Verträglichkeit mit dem Lösungsmittel herabgesetzt. Entgegengesetzt bedeutet bei einem polaren Lösungsmittel (C) ein Isocyanat, das die Polarität der Porenoberfläche herabsetzt, und bei einem (weniger bevorzugten) unpolaren Lösungsmittel (C) ein Isocyanat, das die Polarität der Porenoberfläche erhöht. Bei einem moderat polaren Lösungsmittel gibt es zwei Möglichkeiten für entgegengesetzte Polarität, ein Isocyanat, das die Porenoberfläche polar modifiziert oder-was bevorzugt ist - ein Isocyanat, das durch Modifizierung die Porenoberfläche in ihrer Polarität soweit herabsetzt, dass die Verträglichkeit mit dem moderat polaren Lösungsmittel verringert wird.

Die Amine reagieren im Rahmen dieser bevorzugten Ausführungsform mit überschüssigen Isocyanatgruppen des Gels an der Porenoberfläche unter Bildung von Harnstoffgruppen. Hierdurch verringert sich bevorzugt die Verträglichkeit des Gels mit dem verwendeten Lösungsmittel (C).

Bevorzugte aromatische Amine als Verbindung (D) sind insbesondere Diphenylsulfone mit mindestens zwei Aminogruppen, insbesondere Diaminodiphenlysulfone (DADPS), als organische Verbindung (D) eingesetzt, wobei 4,4'-DADPS ganz besonders bevorzugt ist.

Sofern das erhaltene Gel noch reaktive Aminogruppen, insbesondere im Falle eines Überschusses an reaktiven Aminogruppen gegenüber Isocyanatgruppen in der Gelvorstufe (A), oder andere gegenüber Isocyanaten reaktive Gruppen enthält, kommen als Verbindung (D) insbesondere Verbindungen in Betracht, die gegenüber der Komponente (a2) reaktiv sind und durch deren Umsetzung mit dem Gel eine verringerte Verträglichkeit des resultierenden Gels mit dem Lösungsmittel (C) resultiert. Insbesondere können die gegenüber Komponente (a2) reaktiven Verbindungen (D) eine zum Lösungsmittel entgegengesetzte Polarität aufweisen.

Insbesondere kommen als Verbindung (D) im Rahmen dieser zweiten bevorzugten Ausführungsform die weiter oben diskutierten mehrfunktionellen Isocyanate (a1) in Betracht, wobei die Verbindung (D) vorzugsweise nicht Bestandteil der organischen Gelvorstufe (A) in den Schritten (a), (b) und (c) des erfindungsgemäßen Verfahrens war und darüber hinaus bevorzugt die Porenoberfläche in ihrer Polarität entgegengesetzt modifiziert.

### Schritt (e)

Erfindungsgemäß wird in Schritt (e) das im vorigen Schritt erhaltene Gel durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit getrocknet.

Vorzugsweise erfolgt das Trocknen des erhaltenen Gels durch Überführung des Lösungsmittels (C) in den gasförmigen Zustand bei einer Temperatur und einem Druck unterhalb der kritischen Temperatur und des kritischen Drucks des Lösungsmittels (C). Demzufolge erfolgt vorzugsweise das Trocknen durch Entfernung des Lösungsmittels (C), das bei der Umsetzung zugegen war, ohne vorherigen Austausch gegen ein weiteres Lösungsmittel.

Folglich bringt man nach Schritt (d) beziehungsweise - sofern Schritt (d) nicht durchgeführt wird - nach Schritt (c) und vor Schritt (e) das Gel bevorzugt nicht mit einer organischen Flüssigkeit in Kontakt, um das im Gel, insbesondere in den Poren des Gels, enthaltene Lösungsmittel (C), gegen diese organische Flüssigkeit auszutauschen. Dies gilt unabhängig davon, ob das Gel gealtert wird oder nicht. Indem ein Lösungsmitteltausch unterbleibt, lässt sich das Verfahren besonders einfach und kostengünstig durchführen. Sofern jedoch ein Lösungsmitteltausch durchgeführt wird, ist es bevorzugt, das Lösungsmittel (C) gegen ein unpolares Lösungsmittel auszutauschen, insbesondere gegen Kohlenwasserstoffe wie Pentan.

Für die Trocknung durch Überführung der im Gel enthaltenen Flüssigkeit, bevorzugt das Lösungsmittel (C), in den gasförmigen Zustand kommen grundsätzlich sowohl Verdunstung als auch Verdampfung, jedoch nicht die Sublimation, in Betracht. Das Trocknen durch Verdunstung oder Verdampfung schließt insbesondere das Trocknen unter Atmosphärendruck, das Trocknen im Vakuum, das Trocknen bei Raumtemperatur und das Trocknen bei erhöhter Temperatur, jedoch nicht das Gefriertrocknen, ein. Erfindungsgemäß trocknet man bei einem Druck und einer Temperatur, die unterhalb des kritischen Druckes und unterhalb der kritischen Temperatur der im Gel enthaltenen Flüssigkeit liegen. In Schritt (e) des erfindungsgemäßen Verfahrens trocknet man somit das lösungsmittelhaltige Gel, wobei als Verfahrensprodukt das organische Xerogel entsteht.

Zum Trocknen des Gels öffnet man üblicherweise die Geliervorrichtung und hält das Gel solange unter den genannten Druck- und Temperaturbedingungen, bis die flüssige Phase durch Übergang in den gasförmigen Zustand entfernt ist, d.h. man verdunstet beziehungsweise verdampft die flüssige Phase. Um das Verdunsten zu beschleunigen, ist es häufig vorteilhaft, das Gel aus dem Behälter zu entfernen. Auf diese Weise wird die Phasengrenzfläche Gel/Umgebungsluft, worüber die Verdunstung und/oder Verdampfung stattfindet, vergrößert. Beispielsweise kann man das Gel zum Trocknen auf eine ebene Unterlage oder ein Sieb geben. Als Trocknungsverfahren kommen außerdem die dem Fachmann geläufigen Trocknungsverfahren wie Konvektionstrocknung, Mikrowellentrocknung, Vakuumtrockenschränke oder Kombinationen dieser Verfahren in Betracht.

Man kann das Gel an der Luft, oder falls es sauerstoffempfindlich ist, auch an anderen Gasen wie Stickstoff oder Edelgasen trocknen, und dazu gegebenenfalls einen Trockenschrank oder andere geeignete Vorrichtungen verwenden, in denen sich der Druck, die Temperatur sowie der Lösungsmittelgehalt der Umgebung kontrollieren lässt.

Die beim Trocknen zu wählenden Temperatur- und Druckbedingungen hängen unter anderem von der Natur der im Gel vorhandenen Flüssigkeit ab. Erfindungsgemäß wird bei einem Druck getrocknet, der unter dem kritischen Druck pₖᵣᵢₜ der im Gel vorhanden Flüssigkeit, bevorzugt das Lösungsmittel (C) liegt, und bei einer Temperatur getrocknet, die unter der kritischen Temperatur Tₖᵣᵢₜ liegt. Man trocknet demnach unter subkritischen Bedingungen. Dabei bedeutet kritisch: beim kritischen Druck und der kritischen Temperatur ist die Dichte der flüssigen Phase gleich der Dichte der Gasphase (sog. kritische Dichte), und bei Temperaturen oberhalb Tₖᵣᵢₜ lässt sich die fluide Phase auch bei Anwendung höchster Drücke nicht mehr verflüssigen.

Setzt man als Lösungsmittel Aceton ein, so trocknet man bei Temperaturen von 0°C bis 150°C, bevorzugt 10°C bis 100°C und besonders bevorzugt 15°C bis 80°C, und bei Drücken von Hochvakuum, beispielsweise von 10⁻³ mbar, bis 5 bar, bevorzugt 1 mbar bis 3 bar und insbesondere 10 mbar bis ungefähr 1 bar (absolut). Beispielsweise kann man bei Atmosphärendruck und von 0°C bis 80°C, insbesondere bei Raumtemperatur, trocknen. Besonders bevorzugt trocknet man in Schritt (d) das Gel bei einem Druck von 0,5 bis 2 bar (absolut), und bei einer Temperatur von 0 bis 100°C.

Andere im Gel vorhandene Flüssigkeiten, insbesondere andere Lösungsmittel (C) als Aceton erfordern Anpassungen der Trocknungsbedingungen (Druck, Temperatur, Zeit), die der Fachmann durch einfache Versuche ermitteln kann.

Das Trocknen kann durch Anwendung eines Vakuums beschleunigt bzw. vervollständigt werden. Um die Trocknungswirkung weiter zu verbessern, kann man diese Vakuumtrocknung bei einer höheren Temperatur vornehmen als das Trocknen bei üblichem Druck. Beispielsweise kann man den Großteil des Lösungsmittels (C) zunächst bei Raumtemperatur und Atmosphärendruck innerhalb von 30 min bis 3 Stunden entfernen, und danach das Gel bei 40 bis 80°C unter einem Vakuum von 1 bis 100 mbar, insbesondere 5 bis 30 mbar, innerhalb von 10 min bis 6 Stunden trocknen. Selbstverständlich sind auch längere Trocknungszeiten möglich, beispielsweise von 1 bis 5 Tagen. Bevorzugt sind jedoch häufig Trocknungszeiten von unter 12 Stunden.

Statt einer solchen stufenweisen Trocknung kann man den Druck während des Trocknens auch kontinuierlich, beispielsweise linear oder exponentiell absenken, bzw. die Temperatur in solcher Weise erhöhen, d.h. gemäß eines Druck- bzw. Temperaturprogramms trocknen. Naturgemäß trocknet das Gel umso schneller, je geringer der Feuchtigkeitsgehalt der Luft ist. Gleiches gilt sinngemäß für andere flüssige Phasen als Wasser und andere Gase als Luft.

Die bevorzugten Trocknungsbedingungen hängen nicht nur vom Lösungsmittel, sondern auch von der Natur des Gels ab, insbesondere die Stabilität des Netzwerkes im Verhältnis zu den bei der Trocknung wirkenden Kapillarkräften.

Beim Trocknen in Stufe (e) wird die flüssige Phase in der Regel vollständig oder bis auf einen Restgehalt von 0,01 bis 1 Gew.-%, bezogen auf das erhaltene Xerogel, entfernt.

### Eigenschaften der Xerogele und Verwendung

Die mit dem erfindungsgemäßen Verfahren erhältlichen Xerogele weisen vorzugsweise einen volumengemittelten mittleren Porendurchmesser von höchstens 5 µm auf. Besonders bevorzugt beträgt der volumengemittelte mittlere Porendurchmesser der mit dem erfindungsgemäßen Verfahren erhältlichen Xerogele von 200 nm bis 5 µm.

Der besonders bevorzugte volumengewichtete mittlere Porendurchmesser der mit dem erfindungsgemäßen Verfahren erhältlichen Xerogele beträgt höchstens 4 µm, insbesondere höchstens 3 µm, ganz besonders bevorzugt höchstens 2 µm.

Zwar ist ein möglichst geringer Porendurchmesser bei gleichzeitig hoher Porosität aus Sicht reduzierter Wärmeleitfähigkeit grundsätzlich erwünscht, doch ist der mittlere Porendurchmesser durch die sich verschlechternden mechanischen Eigenschaften des Xerogels, insbesondere dessen Stabilität und Verarbeitbarkeit, durch praktische Erwägungen nach unten begrenzt. Im Allgemeinen beträgt der volumengewichtete mittlere Porendurchmesser mindestens 200 nm, vorzugsweise mindestens 300 nm. In vielen Fällen beträgt der volumengewichtete mittlere Porendurchmesser mindestens 400 nm, beispielsweise mindestens 700 nm.

Bevorzugt weisen die mit dem erfindungsgemäßen Verfahren erhältlichen Xerogele eine Porosität von mindestens 70 Vol.-%, insbesondere von 70 bis 99 Vol.-%, besonders bevorzugt mindestens 80 Vol.-% auf, ganz besonders bevorzugt mindestens 85 Vol.-%, insbesondere von 85 bis 95 Vol.-%. Die Porosität in Vol.-% bedeutet, dass der genannte Anteil des Gesamtvolumens des Xerogels aus Poren besteht. Zwar ist aus Sicht einer minimalen Wärmeleitfähigkeit meist eine möglichst hohe Porosität erwünscht, doch ist die Porosität durch die mechanischen Eigenschaften und die Verarbeitbarkeit des Xerogels nach oben begrenzt.

Die Dichte der gemäß des erfindungsgemäßen Verfahrens erhältlichen organischen Xerogele beträgt üblicherweise von 20 bis 600 g/l, bevorzugt von 50 bis 500 g/l und besonders bevorzugt von 100 bis 400 g/l.

Das erfindungsgemäße Verfahren ergibt ein zusammenhängendes poröses Material (sogenannter Monolith) und nicht nur ein Polymerpulver oder -partikel. Dabei wird die räumliche Form des resultierenden Xerogels durch die Form des Gels bestimmt, die wiederum durch die Form der Geliervorrichtung bestimmt wird. So ergibt beispielsweise ein zylindrischer Gelierbehälter üblicherweise ein annähernd zylinderförmiges Gel, dass dann zu einem Xerogel in Zylinderform getrocknet wird.

Die erfindungsgemäßen Xerogele und die durch das erfindungsgemäße Verfahren erhältlichen Xerogele weisen eine geringe Wärmeleitfähigkeit, eine hohe Porosität und eine geringe Dichte auf. Die Xerogele weisen erfindungsgemäß einen geringen mittleren Porendurchmesser auf. Die Kombination der vorgenannten Eigenschaften erlaubt den Einsatz als Dämmstoff im Bereich der thermischen Isolation, insbesondere für Anwendungen im Vakuumbereich, wo eine möglichst geringe Dicke von Vakuumplatten bevorzugt ist, beispielsweise in Kühlgeraten oder in Gebäuden. Darüber hinaus sind die erfindungsgemäßen Xerogele jedoch auch im Bereich der Wärmeisolation unter Normaldruck vorteilhaft einsetzbar, beispielsweise in Haushaltsgeräten und bei der Wärmedämmung von Gebäuden. So ist die Verwendung in Vakuumisolationspaneelen, insbesondere als Kernmaterial für Vakuumisolationspaneelen, bevorzugt. Bevorzugt ist außerdem die Verwendung der erfindungsgemäßen Xerogele als Dämmstoff.

Im Fall der Wärmedämmung im Bereich niedriger Drücke werden durch die geringe thermische Leitfähigkeit der erfindungsgemäßen Xerogele Anwendungen bei Drücken von 1 bis 100 mbar und insbesondere von 10 mbar bis 100 mbar möglich. Das Eigenschaftsprofil der erfindungsgemäßen Xerogele eröffnet insbesondere Anwendungen, bei denen eine lange Lebensdauer der Vakuumpanele gewünscht wird und die auch bei einer Druckzunahme von ungefähr 2 mbar pro Jahr noch nach vielen Jahren, beispielsweise bei einem Druck von 100 mbar, eine niedrige Wärmeleitfähigkeit aufweisen. Die erfindungsgemäßen Xerogele und die durch das erfindungsgemäße Verfahren erhältlichen Xerogele weisen günstige thermische Eigenschaften einerseits und günstige Materialeigenschaften wie einfache Verarbeitbarkeit und hohe mechanische Stabilität, beispielsweise geringe Brüchigkeit, andererseits auf.

### Beispiele

Die Bestimmung des Porenvolumens in ml pro g Probe und der mittleren Porengröße der Materialien erfolgte mittels Quecksilber-Porosimetrie nach DIN 66133 (1993) bei Raumtemperatur. Die mittlere Porengröße ist im Rahmen dieser Erfindung gleichzusetzen mit dem mittleren Porendurchmesser. Die Bestimmung des volumengewichteten mittleren Porendurchmessers erfolgt dabei rechnerisch aus der nach oben genannter Norm bestimmten Porengrößenverteilung.

Die Porosität in der Einheit Vol.-% wurde gemäß der Formel P = (Vᵢ / (Vᵢ+ Vₛ)) * 100 Vol.-% berechnet, wobei P die Porosität, Vᵢ das Hg-Intrusionsvolumen nach DIN 66133 in ml/g und Vₛ das spezifische Volumen in ml/g des Probenkörpers ist.

Die Dichte p des porösen Materials in der Einheit g/ml wurde gemäß der Formel p = 1 / (Vᵢ + Vₛ) berechnet. Als spezifisches Volumen für poröse Materialien auf Basis von Isocyanat wurde der Wert 1 / Vₛ = 1,38 g/ml verwendet. Der Wert wurde mittels He-Pyknometrie bestimmt.

Die thermische Leitfähigkeit λ wurde mittels des dynamischen Hitzdraht-Verfahrens bestimmt. Beim Hitzdraht-Verfahren wird in die zu untersuchende Probe ein dünner Draht eingebettet, der gleichzeitig als Heizelement und Temperatursensor dient. Als Drahtmaterial wurde ein Platin-Draht mit einem Durchmesser von 100 Mikrometer und einer Länge von 40 mm eingesetzt, der zwischen zwei Hälften des jeweiligen Probenkörpers eingebettet wurde. Der Messaufbau aus Probe und Hitzdraht wurde in einen evakuierbaren Rezipienten präpariert, in dem nach dem Evakuieren der gewünschte Druck durch Belüften mit gasförmigem Stickstoff eingestellt wurde.

Während des Experiments wurde der Draht mit konstanter Leistung beheizt. Die Temperatur betrug 25°C. Die zeitliche Entwicklung des sich am Ort des Hitzdrahtes ergebenden Temperaturanstieges wurde durch Messung des Widerstandes erfasst. Die Wärmeleitfähigkeit wurde durch Anpassung einer analytischen Lösung unter Berücksichtigung eines thermischen Kontaktwiderstandes zwischen Probe und Draht sowie axialer Wärmeverluste an die zeitliche Temperaturentwicklung gemäß H.-P. Ebert et al., High Temp.-High. Press, 1993, 25, 391-401 bestimmt. Die Bestimmung des Gasdrucks erfolgte mit zwei kapazitiven Drucksensoren mit unterschiedlichen Messbereichen (0,1 bis 1000 mbar und 0,001 bis 10 mbar).

### Beispiel 1

(a) Unter Rühren wurden bei 20°C in einem ersten Becherglas 1,71 g Isophorondiisocyanat in 10,6 g Aceton und in einem zweiten Becherglas 1,29 g verzweigtes Polyethylenimin mit einem gewichtsmittleren Molekulargewicht von 1300 g/mol, einer Ladungsdichte von 16 meq/g und einem Verhältnis von Aminogruppen prim:sek:tert von 1:0,91:0,64(Lupasol® G20 wasserfrei von BASF Aktiengesellschaft) in 10,9 g Aceton gelöst.
(b) Es wurden beide Lösungen gemischt. Es resultierte eine klare, niedrigviskose Mischung.
(c) Die Mischung aus (b) wurde 24 Stunden bei Raumtemperatur ausgehärtet.
(e) Anschließend wurde das in Schritt (c) erhaltene Gel aus dem Becherglas genommen und die Flüssigkeit (Aceton) durch 7 Tage langes Trocknen bei 20°C entfernt.

Das erhaltene Material hatte ein Porenvolumen von 4,415 ml/g und einen volumengewichteten mittleren Porendurchmesser von 1,56 µm. Die Porosität betrug 86 Vol.-% mit einer entsprechenden Dichte von 195 g/l. Die thermische Leitfähigkeit Ä des erhaltenen Materials ist aus Tabelle 1 ersichtlich.

**Tabelle 1: Thermische Leitfähigkeit λ des in Beispiel 1 erhaltenen Materials**

| Druck [mbar] | λ [mW/m*K] |
|---|---|
| 1 | 8,9 |
| 2,1 | 9,5 |
| 3 | 10 |
| 7,1 | 11,8 |
| 13 | 12,8 |
| 30 | 17,6 |
| 70 | 23,1 |
| 100 | 25,4 |
| 300 | 31,5 |
| 699 | 34,9 |
| 986 | 35,9 |

### Beispiel 2:

(a) Unter Rühren wurden bei 20°C in einem ersten Becherglas 2,18 g Isophorondiisocyanat in 10,2 g Aceton und in einem zweiten Becherglas 1,42 g verzweigtes Polyethylenimin mit einem gewichtsmittleren Molekulargewicht von 1300 g/mol, einer Ladungsdichte von 16 meq/g und einem Verhältnis von Aminogruppen prim:sek:tert von 1:0,91:0,64(Lupasol® G20 wasserfrei von BASF Aktiengesellschaft) in 10,8 g Aceton gelöst.
(b) Es wurden beide Lösungen gemischt. Es resultierte eine klare, niedrigviskose Mischung.
(c) Die Mischung aus (b) wurde 24 Stunden bei Raumtemperatur ausgehärtet.
(e) Anschließend wurde das in Schritt (c) erhaltene Gel aus dem Becherglas genommen und die Flüssigkeit (Aceton) durch 7 Tage langes Trocknen bei 20°C entfernt.

Das erhaltene Material hatte ein Porenvolumen von 4,167 ml/g und einen volumengewichteten mittleren Porendurchmesser von 0,79 µm. Die Porosität betrug 85 Vol.-% mit einer entsprechenden Dichte von 204 g/l.

### Beispiel 3:

(a) Unter Rühren wurden bei 20°C in einem ersten Becherglas 2,66 g Isophorondiisocyanat in 9,9 g Aceton und in einem zweiten Becherglas 1,54 g verzweigtes Polyethylenimin mit einem gewichtsmittleren Molekulargewicht von 1300 g/mol, einer Ladungsdichte von 16 meq/g und einem Verhältnis von Aminogruppen prim:sek:tert von 1:0,91:0,64 (Lupasol® G20 wasserfrei von BASF Aktiengesellschaft)in 10,7 g Aceton gelöst.
(b) Es wurden beide Lösungen gemischt. Es resultierte eine klare, niedrigviskose Mischung.
(c) Die Mischung aus (b) wurde 24 Stunden bei Raumtemperatur ausgehärtet.
(e) Anschließend wurde das in Schritt (c) erhaltene Gel aus dem Becherglas genommen und die Flüssigkeit (Aceton) durch 7 Tage langes Trocknen bei 20°C entfernt.

Das erhaltene Material hatte ein Porenvolumen von 3,334 ml/g und einen volumengewichteten mittleren Porendurchmesser von 0,40 µm. Die Porosität betrug 82 Vol.-% mit einer entsprechenden Dichte von 246 g/l.

### Beispiel 4:

(a) Unter Rühren wurden bei 20°C in einem ersten Becherglas 1,80 g Isophorondiisocyanat in 10,5 g Aceton und in einem zweiten Becherglas 1,20 g verzweigtes Polyethylenimin mit einem gewichtsmittleren Molekulargewicht von 2000 g/mol, einer Ladungsdichte von 16 meq/g und einem Verhältnis von Aminogruppen prim:sek:tert von 1:0,92:0,70 (Lupasol® PR8515 von BASF Aktiengesellschaft) in 11,0 g Aceton gelöst.
(b) Es wurden beide Lösungen gemischt. Es resultierte eine klare, niedrigviskose Mischung.
(c) Die Mischung aus (b) wurde 24 Stunden bei Raumtemperatur ausgehärtet.
(e) Anschließend wurde das in Schritt (c) erhaltene Gel aus dem Becherglas genommen und die Flüssigkeit (Aceton) durch 7 Tage langes Trocknen bei 20°C entfernt.

Das erhaltene Material hatte ein Porenvolumen von 4,615 ml/g und einen volumengewichteten mittleren Porendurchmesser von 1,14 µm. Die Porosität betrug 86 Vol.-% mit einer entsprechenden Dichte von 187 g/l.

### Beispiel 5:

(a) Unter Rühren wurden bei 20°C in einem ersten Becherglas 2,27 g Isophorondiisocyanat in 10,1 g Aceton und in einem zweiten Becherglas 1,33 g verzweigtes Polyethylenimin mit einem gewichtsmittleren Molekulargewicht von 2000 g/mol, einer Ladungsdichte von 16 meq/g und einem Verhältnis von Aminogruppen prim:sek:tert von 1:0,92:0,70 (Lupasol® PR8515 von BASF Aktiengesellschaft) in 10,9 g Aceton gelöst.
(b) Es wurden beide Lösungen gemischt. Es resultierte eine klare, niedrigviskose Mischung.
(c) Die Mischung aus (b) wurde 24 Stunden bei Raumtemperatur ausgehärtet.
(e) Anschließend wurde das in Schritt (c) erhaltene Gel aus dem Becherglas genommen und die Flüssigkeit (Aceton) durch 7 Tage langes Trocknen bei 20°C entfernt.

Das erhaltene Material hatte ein Porenvolumen von 3,607 ml/g und einen volumengewichteten mittleren Porendurchmesser von 0,60 µm. Die Porosität betrug 83 Vol.-% mit einer entsprechenden Dichte von 231 g/l.

### Beispiel 6:

(a) Unter Rühren wurden bei 20°C in einem ersten Becherglas 2,75 g Isophorondiisocyanat in 9,8 g Aceton und in einem zweiten Becherglas 1,45 g verzweigtes Polyethylenimin mit einem gewichtsmittleren Molekulargewicht von 2000 g/mol, einer Ladungsdichte von 16 meq/g und einem Verhältnis von Aminogruppen prim:sek:tert von 1:0,92:0,70 (Lupasol® PR8515 von BASF Aktiengesellschaft) in 10,8 g Aceton gelöst.
(b) Es wurden beide Lösungen gemischt. Es resultierte eine klare, niedrigviskose Mischung. (c) Die Mischung aus (b) wurde 24 Stunden bei Raumtemperatur ausgehärtet.
(e) Anschließend wurde das in Schritt (c) erhaltene Gel aus dem Becherglas genommen und die Flüssigkeit (Aceton) durch 7 Tage langes Trocknen bei 20°C entfernt.

Das erhaltene Material hatte ein Porenvolumen von 3,244 ml/g und einen volumengewichteten mittleren Porendurchmesser von 0,42 µm. Die Porosität betrug 82 Vol.-% mit einer entsprechenden Dichte von 252 g/l.

## Patentansprüche

1. Xerogel enthaltend
- von 20 bis 90 Gew.-% einer Monomerkomponente (a1) bestehend aus mindestens einem mehrfunktionellen Isocyanat und
- von 10 bis 80 Gew.-% einer Monomerkomponente (a2) bestehend aus mindestens einem Polyalkylenpolyamin,
wobei die Summe der Gew.-% der Monomerkomponenten (a1) und (a2) 100 Gew.-% ergibt und wobei die Monomerkomponenten im Xerogel in polymerer Form vorliegen und der volumengewichtete mittlere Porendurchmesser des Xerogels höchstens 5 µm beträgt.

2. Xerogel nach Anspruch 1, enthaltend von 30 bis 85 Gew.-% der Monomerkomponente (a1) und von 15 bis 70 Gew.-% der Monomerkomponente (a2).

3. Xerogel nach den Ansprüchen 1 oder 2, wobei die Monomerkomponente (a2) aus mindestens einem Polyethylenimin besteht.

4. Xerogel nach den Ansprüchen 1 bis 3, wobei die Monomerkomponente (a1) aus mindestens einem mehrfunktionellen Isocyanat ausgewählt aus Diphenylmethandiisocyanat, Toluylendiisocyanat, oligomerem Diphenylmethandiisocyanat und Isophorondiisocyanat besteht.

5. Xerogel nach den Ansprüchen 1 bis 4, wobei die Monomerkomponente (a1) oligomeres Diphenylmethandiisocyanat enthält und eine Funktionalität von mindestens 2,5 aufweist.

6. Xerogel nach den Ansprüchen 1 bis 5, wobei die Monomerkomponente (a1) aus oligomerem Diphenylmethandiisocyanat und die Monomerkomponente (a2) aus mindestens einem Polyethylenimin besteht und die Summe aus der Funktionalität der Monomerkomponente (a1) und der Funktionalität der Monomerkomponente (a2) mindestens 5,5 beträgt.

7. Xerogel nach den Ansprüchen 1 bis 6, wobei die Monomerkomponente (a1) aus Isophorondiisocyanat und die Monomerkomponente (a2) aus mindestens einem Polyethylenimin besteht.

8. Xerogel nach den Ansprüchen 1 bis 7, wobei der volumengewichtete mittlere Porendurchmesser des Xerogels höchstens 3 µm beträgt.

9. Verfahren zur Herstellung von Xerogelen, umfassend
(a) Bereitstellen der Monomerkomponenten (a1) und (a2) gemäß den Ansprüchen 1 bis 8 in getrennter Form,
(b) Vereinigen der Monomerkomponenten (a1) und (a2) in Gegenwart eines Lösungsmittels (C),
(c) Umsetzung der Monomerkomponenten (a1) und (a2) in Gegenwart des Lösungsmittels (C) zu einem Gel,
(e) Trocknen des im vorigen Schritt erhaltenen Gels durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit,
wobei in Schritt (a) die Monomerkomponente (a2) gelöst in einem Keton und/oder Aldehyd als Lösungsmittel (C) bereitgestellt und in Schritt (b) mit der Monomerkomponente (a1) vereinigt wird.

10. Verfahren zur Herstellung von Xerogelen nach Anspruch 9, weiterhin umfassend
(d) Modifizierung des erhaltenen Gels mittels mindestens einer organischen Verbindung (D), welche vorzugsweise in den Schritten (a), (b) und (c) nicht zugegen war;
wobei die Schritte in der Reihenfolge a-b-c-d-e durchgeführt werden.

11. Verfahren nach den Ansprüchen 9 oder 10, wobei das Trocknen des erhaltenen Gels durch Überführung des Lösungsmittels (C) in den gasförmigen Zustand bei einer Temperatur und einem Druck unterhalb der kritischen Temperatur und des kritischen Drucks des Lösungsmittels (C) erfolgt.

12. Verfahren nach den Ansprüchen 9 bis 11, wobei die primären Aminogruppen der Monomerkomponente (a2) zu Beginn von Schritt (c), vorzugsweise zu Beginn von Schritt (b), geschützt vorliegen.

13. Verfahren nach den Ansprüchen 9 bis 12, wobei die primären Aminogruppen der Monomerkomponente (a2) in Schritt (a) in Form eines Ketimins und/oder eines Aldimins bereitgestellt werden.

14. Verwendung der Xerogele gemäß den Ansprüchen 1 bis 8 als Dämmstoff oder für Vakuumisolationspaneele.

## Claims

1. A xerogel comprising
- from 20 to 90% by weight of a monomer component (a1) consisting of at least one polyfunctional isocyanate and
- from 10 to 80% by weight of a monomer component (a2) consisting of at least one polyalkylenepolyamine,
where the sum of the percentages by weight of the monomer components (a1) and (a2) adds up to 100% by weight and wherein the monomer components are present in polymeric form in the xerogel and the volume-weighted mean pore diameter of the xerogel is at most 5 µm.

2. The xerogel according to claim 1, comprising from 30 to 85% by weight of monomer component (a1) and from 15 to 70% by weight of monomer component (a2).

3. The xerogel according to claim 1 or 2, wherein monomer component (a2) consists of at least one polyethyleneimine.

4. The xerogel according to claims 1 to 3, wherein monomer component (a1) consists of at least one polyfunctional isocyanate selected from diphenylmethane diisocyanate, tolylene diisocyanate, oligomeric diphenylmethane diisocyanate and isophorone diisocyanate.

5. The xerogel according to claims 1 to 4, wherein monomer component (a1) comprises oligomeric diphenylmethane diisocyanate and has a functionality of at least 2.5.

6. The xerogel according to claims 1 to 5, wherein monomer component (a1) consists of oligomeric diphenylmethane diisocyanate and monomer component (a2) of at least one polyethyleneimine, and the sum of the functionality of monomer component (a1) and of the functionality of monomer component (a2) is at least 5.5.

7. The xerogel according to claims 1 to 6, wherein monomer component (a1) consists of isophorone diisocyanate and monomer component (a2) of at least one polyethyleneimine.

8. The xerogel according to claims 1 to 7, wherein the volume-weighted mean pore diameter of the xerogel is at most 3 µm.

9. A process for preparing xerogels, comprising
(a) providing monomer components (a1) and (a2) according to claims 1 to 8 in separate form,
(b) combining monomer components (a1) and (a2) in the presence of a solvent (C),
(c) converting monomer components (a1) and (a2) in the presence of the solvent (C) to a gel,
(e) drying the gel obtained in the previous step by converting the liquid present in the gel to the gaseous state at a temperature and a pressure below the critical temperature and the critical pressure of the liquid present in the gel,
wherein monomer component (a2) is provided in step (a) dissolved in a ketone and/or aldehyde as the solvent (C) and is combined in step (b) with monomer component (a1).

10. The process for preparing xerogels according to claim 9, further comprising
(d) modifying the gel obtained by means of at least one organic compound (D) which was preferably not present in steps (a), (b) and (c);
the steps being performed in the sequence a-b-c-d-e.

11. The process according to claim 9 or 10, wherein the gel obtained is dried by converting the solvent (C) to the gaseous state at a temperature and a pressure below the critical temperature and the critical pressure of the solvent (C).

12. The process according to claims 9 to 11, wherein the primary amino groups of monomer component (a2) are present in protected form at the start of step (c), preferably at the start of step (b).

13. The process according to claims 9 to 12, wherein the primary amino groups of monomer component (a2) are provided in step (a) in the form of a ketimine and/or of an aldimine.

14. The use of the xerogels according to claims 1 to 8 as an insulating material or for vacuum insulation panels.

## Revendications

1. Xérogel contenant
- 20 à 90% en poids d'un composant monomère (a1) constitué par au moins un isocyanate polyfonctionnel et
- 10 à 80% en poids d'un composant monomère (a2)
constitué par au moins une polyalkylènepolyamine, la somme en % en poids des composants monomères (a1) et (a2) valant 100% en poids et les composants monomères dans le xérogel se trouvant sous forme polymère et le diamètre moyen des pores, pondéré en volume, du xérogel valant au plus 5 µm.

2. Xérogel selon la revendication 1, contenant 30 à 85% en poids du composant monomère (a1) et 15 à 70% en poids du composant monomère (a2).

3. Xérogel selon les revendications 1 ou 2, où le composant monomère (a2) est constitué par au moins une polyéthylèneimine.

4. Xérogel selon les revendications 1 à 3, où le composant monomère (a1) est constitué par au moins un isocyanate polyfonctionnel, choisi parmi le diphénylméthanediisocyanate, le toluylènediisocyanate, le diphénylméthanediisocyanate oligomère et l'isophoronediisocyanate.

5. Xérogel selon les revendications 1 à 4, où le composant monomère (a1) contient du diphénylméthanediisocyanate oligomère et présente une fonctionnalité d'au moins 2,5.

6. Xérogel selon les revendications 1 à 5, où le composant monomère (a1) est constitué par du diphénylméthanediisocyanate oligomère et le composant monomère (a2) est constitué par au moins une polyéthylèneimine et la somme de la fonctionnalité du composant monomère (a1) et de la fonctionnalité du composant monomère (a2) est d'au moins 5,5.

7. Xérogel selon les revendications 1 à 6, où le composant monomère (a1) est constitué par de l'isophoronediisocyanate et le composant monomère (a2) est constitué par au moins une polyéthylèneimine.

8. Xérogel selon les revendications 1 à 7, où le diamètre moyen des pores, pondéré en volume, du xérogel est d'au plus 3 µm.

9. Procédé pour la préparation de xérogels, comprenant
(a) la mise à disposition des composants monomères (a1) et (a2) selon les revendications 1 à 8 sous forme séparée,
(b) la réunion des composants monomères (a1) et (a2) en présence d'un solvant (C),
(c) la transformation des composants monomères (a1) et (a2) en présence du solvant (C) en un gel,
(e) le séchage du gel obtenu dans l'étape précédente par transformation du liquide contenu dans le gel à l'état gazeux à une température et une pression inférieures à la température critique et à la pression critique du liquide contenu dans le gel,
où, dans l'étape (a), le composant monomère (a2) est mis à disposition sous forme dissoute dans une cétone et/ou un aldéhyde comme solvant (C) et est réuni dans l'étape (b) avec le composant monomère (a1).

10. Procédé pour la préparation de xérogels selon la revendication 9, comprenant en outre
(d) la modification du gel obtenu au moyen d'au moins un composé organique (D), qui n'est de préférence pas présent dans les étapes (a), (b) et (c) ;
où les étapes sont réalisées dans l'ordre a-b-c-d-e.

11. Procédé selon la revendication 9 ou 10, où le séchage du gel obtenu est réalisé par transformation du solvant (C) à l'état gazeux à une température et une pression inférieures à la température critique et à la pression critique du solvant (C).

12. Procédé selon les revendications 9 à 11, où les groupes amino primaires du composant monomère (a2) se trouvent sous forme protégée au début de l'étape (c), de préférence au début de l'étape (b).

13. Procédé selon les revendications 9 à 12, où les groupes amino primaires du composant monomère (a2) sont mis à disposition dans l'étape (a) sous forme d'une cétimine et/ou d'une aldimine.

14. Utilisation des xérogels selon les revendications 1 à 8 comme isolant ou pour des panneaux d'isolation sous vide.
